# EUROPÄISCHE PATENTANMELDUNG

(11) **EP 2 420 709 A1**
(43) Veröffentlichungstag der Anmeldung: **22.02.2012**
(21) Anmeldenummer: 10172891.3
(22) Anmeldetag: 16.08.2010
(51) Int. Cl.: F16K 3/314, F16K 51/02

(54) **Vakuumventil und Verschlussglied zum gasdichten Schliessen eines Fliesswegs mittels einer Linearbewegung**

(71) Anmelder: VAT Holding AG, 9469 Haag (CH)
(72) Erfinder: Geiser, Friedrich, A-6714, Nüziders (AT); Neumeir, Anton, CH-9658, Wildhaus (CH)
(74) Vertreter: Harmann, Bernd-Günther

(57) **Zusammenfassung**

Die Erfindung betrifft ein Vakuumventil (1) zum gasdichten Schliessen eines Fliesswegs (F) mittels einer Linearbewegung, mit einem Verschlussglied (5), das linear entlang einer zu der Öffnungsachse (4) quer verlaufenden Verstellachse (6) verschiebbar ist, einer die Öffnung (3) umschliessenden, senkrecht oder schräg in eine Öffnungsrichtung (9) weisenden ersten Dichtfläche (10) des Ventilgehäuses (2) und einer mit der ersten Dichtfläche (10) korrespondierenden zweiten Dichtfläche (11) des Verschlussglieds (5). Ein erster und zweiter Hauptabschnitt (12a, 12b) weisen zueinander einen geometrischen Versatz quer zu der Verstellachse (6) auf. Seitliche U-förmige Seitenabschnitte (14a, 14b), die jeweils einen ersten Schenkel (15a), einen zweiten Schenkel (15b) und eine Basis (15c) aufweisen, verbinden die Hauptabschnitte (12a, 12b) miteinander, wobei die beiden ersten Schenkel (15a) jeweils im Wesentlichen entlang zu der Verstellachse (6) parallelen ersten Schenkelebenen (16a) verlaufen. Die jeweilige Basis (15c) verbindet den ersten Schenkel (15a) und den zweiten Schenkel (15b) und überbrückt den geometrischen Versatz quer zu der Verstellachse (6). Zwischen dem ersten Hauptabschnitt (12a) und den beiden ersten Schenkeln (15a) ist jeweils ein erster Krümmungsabschnitt (17a) angeordnet, wobei die beiden ersten Schenkelebenen (16a) jeweils um mindestens 30 Grad gegenüber der ersten Hauptebene (13a) abgewinkelt sind. Ausserdem betrifft die Erfindung ein korrespondierendes Verschlussglied (5).

## Beschreibung

Die Erfindung betrifft ein Vakuumventil zum gasdichten Schliessen eines Fliesswegs mittels einer Linearbewegung nach dem Oberbegriff des Anspruchs 1 und ein entsprechendes Verschlussglied nach dem Oberbegriff des Anspruchs 13.

Vakuumventile nach dem Oberbegriff des Anspruchs 1 und Verschlussglieder nach dem Oberbegriff des Anspruchs 13 sind insbesondere in Form des als Rechteckinsertventil ausgestalteten Transferventils mit der Produktbezeichnung "MONOVAT Reihe 02 und 03" der Firma VAT Vakuumventile AG in Haag, Schweiz bekannt. Der Aufbau und die Funktionsweise eines solchen Ventils werden beispielsweise in der US 4,809,950 (Geiser) und der US 4,881,717 (Geiser) in schematischer Weise beschrieben.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC-und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Die Anforderungen an die bei Vakuumventilen zum Einsatz kommenden Dichtungen sind sehr hoch. Einerseits muss im geschlossenen Zustand des Ventils die Dichtigkeit des Ventils gewährleistet sein. Dies ist vor allem aufgrund der im Vakuumbereich hohen Differenzdrücke und der somit auftretenden grossen Kräfte, die auf den Ventilverschluss wirken, eine grosse Herausforderung. Da die zum Einsatz kommenden Dichtungen bei übermässig hohen Verpressungen einem überdurchschnittlichen hohen Verschleiss unterliegen oder zerstört werden, muss der Aufbau des Ventils derart sein, dass die Differenzdruckkräfte nicht oder nur begrenzt auf die Dichtungen wirken können. Ausserdem sind Querbelastungen und Längsbelastungen auf die Dichtung möglichst gering zu halten. Vor allem bei Querbelastungen quer zu der Längsrichtung der Dichtung besteht bei O-Ring-Dichtungen die Gefahr, dass sie aus ihrer Halterung, insbesondere der Nut, in welcher sie fixiert sind, gerissen werden. Auch aufvulkanisierte Dichtungen dürfen nur sehr begrenzten Querkräften ausgesetzt werden. Im geöffneten Zustand des Ventils sind die Dichtungen zum Teil aggressiven Medien ausgesetzt und müssen daher entweder derart beschaffen sein, dass sie den Einfüssen standhalten können, und/oder aus dem Fliessweg des Mediums, auch zur Vermeidung von Abrasion, herausbewegt werden. Ein übermässig hoher Verschleiss der Dichtung stellt einen Unsicherheitsfaktor für die Prozesssicherheit dar und erfordert einen regelmässigen Austausch der Dichtung, was wiederum zu erhöhten Stillstandszeiten im Prozess führt.

Unterschiedliche Ausführungsformen von Vakuumventilen, insbesondere deren Dichtungs- und Antriebstechnologien, sind aus dem Stand der Technik bekannt, welche unter anderem als Ziel die Erhöhung der Lebensdauer der eingesetzten Dichtungen sowie eine verbesserte Prozesssicherheit haben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Die beschriebene zweistufige Bewegung, bei welcher das Verschlussglied zuerst quer über die Öffnung geschoben wird, ohne dass es zu einer Berügung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Nachteilig ist jedoch der verhältnismässig komplexe Aufbau des Antriebs, der insbesondere entweder von einem einzigen Antrieb, der eine L-förmige Bewegung des Verschlussglieds ermöglicht, oder von einer Mehrzahl an Antrieben, beispielsweise zwei Linearantrieben oder einem Linear- und einem Spreizantrieb, gebildet wird. Spreizantriebe, welche meist unmittelbar hinter dem Verschlussteller angeordnet sind und diesen relativ zu dem Schaft, auf welchem sie sich befinden, in senkrechter Richtung auf den Ventilsitz verstellen, haben ausserdem den Nachteil, dass eine Vielzahl an mechanischen Teilen, welche zueinander Relativbewegungen ausführen, im Ventilinneren angeordnet sind. Dies erhöht zu einen die Komplexität des Aufbaus und zum anderen die Erzeugung von prozessschädigenden Reibpartikeln. Ein weiterer Nachteil der mehrstufigen Bewegung ist die begrenzte Verstellgeschwindigkeit des Verschlussglieds zwischen dem vollständig geöffneten und dem vollständig geschlossenen Zustand. Keilventile, die lediglich linear verstellt werden, ermöglichen zwar eine hohe Verstellgeschwindigkeit, sie eignen sich jedoch aufgrund der Querbeanspruchung der Dichtung zum Teil kaum für den Vakuumbereich, und wenn doch, dann für nur wenige Verstellzyklen.

Dieses Problem wird mittels Schieberventilen gelöst, bei welchen der Schliess- und Dichtvorgang zwar über eine einzige lineare Bewegung erfolgt, jedoch die Dichtgeometrie derart ist, dass eine Querbeanspruchung der Dichtung gänzlich vermieden wird. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Das dort beschriebene Ventil besitzt in seinem Gehäuse eine Dichtfläche, die, in Richtung der Achse der Ventildurchgangsöffnung gesehen, hintereinander liegende Abschnitte besitzt, die in seitlich nach aussen verlaufende, ebene Dichtflächenabschnitte über stetig verlaufende Krümmungen übergehen, wobei die gedachten Erzeugenden dieser einteiligen, aber mehrere Abschnitte aufweisenden Dichtfläche parallel zur Achse der Ventildurchgangsöffnung liegen. Die Dichtfläche ist bearbeitet. Das Verschlussglied besitzt eine dazu korrespondierende Auflagefläche für die umfangsgeschlossene Dichtung. Detaillierter beschrieben besitzt der so genannte Ventilschieber ein Schiebergehäuse und eine Schieberdurchgangsöffnung, die mit einem in seiner Ebene verschiebbaren Verschlussglied verschliessbar ist. Im Bereich der Schieberdurchgangsöffnung ist eine Dichtfläche vorgesehen, an der in der Schliessstellung des Verschlussgliedes eine an diesem angeordnete, umfangsgeschlossene Dichtung anliegt, wobei die gedachten, geraden Erzeugenden der Dichtfläche parallel zur Achse der Schieberdurchgangsöffnung liegen. Die umfangsgeschlossene, einstückige Dichtung weist Abschnitte unterschiedlicher Längen und/oder Formen auf, die in verschiedenen Ebenen liegen, wobei zwei Hauptabschnitte der umfangsgeschlossenen Dichtung in Ebenen liegen, welche zur Achse der Schieberdurchgangsöffnung rechtwinklig stehen und voneinander distanziert sind. Die beiden Hauptabschnitte der Dichtung sind durch Seitenabschnitte verbunden. Das Verschlussglied besitzt zum Verlauf der Dichtfläche des Gehäuses eine korrespondierend verlaufende, die umfangsgeschlossene Dichtung tragende Fläche. Die Seitenabschnitte der umfangsgeschlossenen Dichtung verlaufen U-förmig. Jeweils die Schenkel dieser U-förmig verlaufenden Seitenabschnitte liegen in einer Ebene. Die in Achsrichtung der Schieberdurchgangsöffnung gesehen hintereinander liegenden Abschnitte der Dichtfläche gehen für die Anlage der Hauptabschnitte der Dichtung in jenem Bereich, in dem sie eine gemeinsame, gerade, achsparallele Erzeugende besitzen, in seitlich nach aussen verlaufende ebene Dichtflächenabschnitte über. Diese ebenen Dichtflächenabschnitte liegen in zueinander und zur Achse der Schieberdurchgangsöffnung parallel liegenden Ebenen.

Ein geeigneter Antrieb für ein solches, mittels einer linearen Bewegung verschliessbares Transferventil ist in der JP 6241344 (Buriida Fuuberuto) dargestellt. Der dort beschriebene Antrieb besitzt exzentrisch gelagerte Hebel zum linearen Verschieben der Schubstangen, auf welchen das Verschlussglied montiert ist.

Der aus dem Stand der Technik bekannte und in der US 4,809,950 (Geiser) beschriebene Ventilschieber wird im Folgenden anhand der Figuren 6a und 6b beschrieben. Der dort rein schematisch gezeigte Ventilschieber hat zur besseren Veranschaulichung des Verlaufs der Dichtflächen einen runden Öffnungsquerschnitt, während das unter der Produktbezeichnung "MONOVAT Reihe 02 und 03" bekannte und als Rechteckinsertventil ausgestaltete Transferventil der Firma VAT Vakuumventile AG in Haag, Schweiz einen rechteckigen Öffnungsquerschnitt aufweist, dessen Breite wesentlich grösser ist als dessen Höhe.

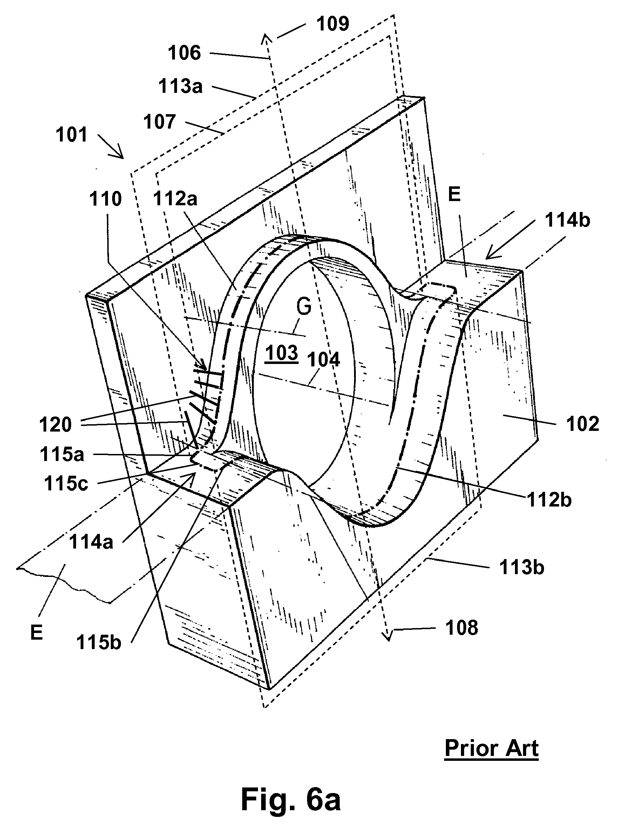

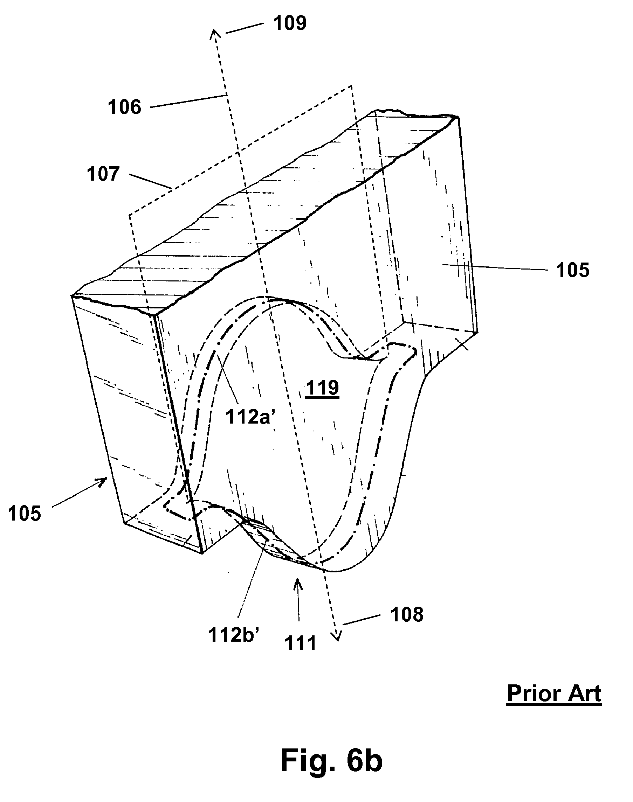

Das Ventil 101 zum gasdichten Schliessen eines Fliesswegs mittels einer Linearbewegung besitzt ein Ventilgehäuse 102 mit einer Öffnung 103 für den Fliessweg, wobei die Öffnung 103 eine geometrische Öffnungsachse 104 entlang des Fliesswegs aufweist, wie in Figur 6a gezeigt. Ein in Figur 6b dargestelltes Verschlussglied 105 ist linear entlang einer zu der Öffnungsachse 104 quer verlaufenden, geometrischen Verstellachse 106 in einer Verschlussgliedebene 107 von einer die Öffnung 103 freigebenden, geöffneten Position in eine über die Öffnung 103 linear geschobene, geschlossene Position in eine Schliessrichtung 108 und umgekehrt zurück in eine Öffnungsrichtung 109 verschiebbar, wie in Figur 6a dargestellt.

In den Figuren 6a und 6b sind das Ventilgehäuse 102 und das Verschlussglied 105 separat im auseinander gebauten Zustand dargestellt, wobei insbesondere die Verstellachse 106 die relative Lage und Verstellbarkeit der beiden Teile 102 und 105 verdeutlicht.

Eine gekrümmte erste Dichtfläche 110 umschliesst die Öffnung 103 des Ventilgehäuses 102. Auf dem Verschlussglied 105 ist eine mit der ersten Dichtfläche 110 korrespondierende zweite Dichtfläche 111 des Verschlussglieds 105, die eine der ersten Dichtfläche 110 entsprechende Form aufweist, angeordnet. Im Folgenden wird vor allem der Aufbau der ersten Dichtfläche 110 des Ventilgehäuses 102 beschrieben. Aufgrund des entsprechenden, mit der ersten Dichtfläche 110 korrespondierenden Aufbaus kann auf eine detaillierte Beschreibung der entsprechenden zweiten Dichtfläche 111 verzichtet werden.

Vorzugsweise auf der zweiten Dichtfläche 111, und/oder auf der ersten Dichtfläche 110, ist eine nicht dargestellte Dichtung, beispielsweise in Form einer aufvulkanisierten Dichtung oder eines O-Rings, angeordnet, die entlang der jeweiligen Dichtfläche, insbesondere der dargestellten Strichpunktlinie verläuft. Zur Vereinfachung werden im Folgenden die Dichtflächen 110 und 111 als dichtend wirkende Flächen, also die Dichtung bzw. der Ventilsitz betrachtet.

Die erste Dichtfläche 110 setzt sich aus unterschiedlich geformten, jeweils zu der Verstellachse 106 nichtparallelen Abschnitten 112a, 112b, 114a, 114b zusammen. Die Flächennormalen 120 der Abschnitte 112a, 112b, 114a, 114b der ersten Dichtfläche 110 weisen Richtungskomponenten auf, die zu der Verstellachse 106 jeweils parallel sind. In anderen Worten weisen alle Flächennormalen 120 der ersten Dichtfläche 110 zumindest teilweise, also mit einer Richtungskomponente, in die Öffnungsrichtung 109, wie in Figur 6a anhand der mittels kurzer Striche veranschaulichten Flächennormalen 120 gezeigt. Wieder in anderen Worten weist die erste Dichtfläche 110 senkrecht oder schräg in die Öffnungsrichtung 109 und verläuft in keinem Abschnitt parallel zu der Verstellachse 106. Somit verläuft keine der Flächennormalen 120 der ersten Dichtfläche parallel zu einer geometrischen Normalebene, die von der Verstellachse 106 senkrecht durchstossen wird.

Ein erster Hauptabschnitt 112a der ersten Dichtfläche 110, Figur 6a, sowie korrespondierender erster Hauptabschnitt 112a' der zweiten Dichtfläche 111, Figur 6b, verlaufen entlang einer geometrischen ersten Hauptebene 113a. Die Flächennormalen 120 des ersten Hauptabschnitts 112a liegen in der ersten Hauptebene 113a. Ein zweiter Hauptabschnitt 112b der ersten Dichtfläche 110, Figur 6a, sowie ein korrespondierender zweiter Hauptabschnitt 112b' der zweiten Dichtfläche 111, Figur 6b, verlaufen hingegen entlang einer geometrischen zweiten Hauptebene 113b. Die Flächennormalen 120 dieses zweiten Hauptabschnitts 112b liegen in der zweiten Hauptebene 113b. Die erste Hauptebene 113a und die zweite Hauptebene 113b sind zueinander beabstandet, verlaufen parallel zueinander und parallel zu der Verschlussgliedebene 107. Somit weisen der erste Hauptabschnitt 112a und der gegenüberliegende zweite Hauptabschnitt 112b zueinander einen geometrischen Versatz quer zu der Verstellachse 106 und in Richtung der Öffnungsachse 104 auf. Zwischen den beiden gegenüberliegenden Hauptabschnitten 112a und 112b in dem sich entlang der Verstellachse 106 erstreckenden Bereich ist die Öffnung 103 angeordnet.

Ein seitlicher erster U-förmiger Seitenabschnitt 114a der ersten Dichtfläche 110 verbindet den ersten Hauptabschnitt 112a und den zweite Hauptabschnitt 112b auf der einen Seite der ersten Dichtfläche 110, während ein seitlicher zweiter U-förmiger Seitenabschnitt 114b der ersten Dichtfläche 110 den ersten Hauptabschnitt 112a und den zweiten Hauptabschnitt 112b auf der anderen Seite der ersten Dichtfläche 110 verbindet.

Der erste U-förmige Seitenabschnitt 114a und der zweite U-förmige Seitenabschnitt 114b weisen jeweils einen dem ersten Hauptabschnitt 112a zugeordneten ersten Schenkel 115a, einen dem zweiten Hauptabschnitt 112b zugeordneten zweiten Schenkel 115b und eine Basis 115c auf. Die beiden ersten Schenkel 115a verlaufen jeweils entlang ersten Schenkelebenen, die jeweils zu der Verstellachse 6 parallel sind und die jeweils auf der ersten Hauptebene 113a liegen. In anderen Worten verlaufen die beiden ersten Schenkel 115a und der erste Hauptabschnitt 112a entlang einer Ebene, nämlich der ersten Hauptebene 113a, wobei die Flächennormalen der ersten Schenkel 115a und des ersten Hauptabschnitts 112a in dieser ersten Hauptebene 113a liegen. Die beiden zweiten Schenkel 115b verlaufen wiederum jeweils entlang zu der Verstellachse 6 parallelen zweiten Schenkelebenen, die jeweils auf der zweiten Hauptebene 113b liegen. In anderen Worten verlaufen die zweiten Schenkel 115b und der zweite Hauptabschnitt 112b entlang einer Ebene, nämlich der zweiten Hauptebene 113b, wobei die Flächennormalen der beiden zweiten Schenkel 115b und des zweiten Hauptabschnitts 112b in dieser zweiten Hauptebene 113b liegen. Wie auch der erste Hauptabschnitt 112a und der zweite Hauptabschnitt 112b weisen somit die beiden ersten Schenkel 115a zu den beiden zweiten Schenkeln 115b einen geometrischen Versatz quer zu der Verstellachse 106 und in Richtung der Öffnungsachse 104 auf.

Die jeweilige Basis 115c des ersten U-förmigen Seitenabschnitts 114a und des zweiten U-förmigen Seitenabschnitts 114b verbindet jeweils den ersten Schenkel 115a und den zweiten Schenkel 115b miteinander und überbrückt den geometrischen Versatz quer zu der Verstellachse 106 in Richtung parallel zu der Öffnungsachse 104. Die beiden Basen 115c liegen auf einer gemeinsamen geometrischen Ebene E, die von der Verstellachse 106 senkrecht durchstossen wird und parallel zu der Öffnungsachse 104 liegt.

Die zweite Dichtfläche 111 kann durch lineares Verschieben des Verschlussgliedes 105 entlang der Verstellachse 106 in die Schliessrichtung 108 in die geschlossene Position gebracht werden, in welcher die zweite Dichtfläche 111 auf die erste Dichtfläche 110 in die Schliessrichtung 8 drückt und somit in einem dichtenden Kontakt mit der ersten Dichtfläche 110 steht, wodurch das Verschlussglied 105 mit seiner seitlichen Verschlussfläche 119 die Öffnung 103 gasdicht verschliesst.

Dieses aus dem Stand der Technik bekannte, mittels einer einzigen linearen Bewegung schliessbare Vakuumventil hat zahlreiche Vorteile gegenüber den mittels zweier Bewegungen schliessbaren Transferventilen, die einen verhältnismässig komplex aufgebauten Antrieb erfordern, oder gegenüber den Keilventilen, bei welchen die Dichtungen quer beansprucht werden. Da das Verschlussglied des oben beschriebenen Vakuumventils einteilig ist, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist. Die umlaufende Dichtung findet in allen ihren Abschnitten eindeutig reproduzierbare Verhältnisse bei den diversen Schliessvorgängen vor. Da die Dichtung beim Schliessen und beim Auftreten des Schliessdruckes im Wesentlichen nur in Richtung der linearen Schliessbewegung in senkrechter Richtung auf die Dichtung bzw. teilweise in Längsrichtung, nicht jedoch quer zu ihrer Längserstreckung beansprucht wird, so dass Querkräfte auf die Dichtung vermieden werden, eignet sich dieses Vakuumventil für hochqualifizierte Dichtaufgaben im Vakuum- und Hochvakuumbereich. Die Dichtflächen können ausserdem bearbeitet werden, um den hohen Dichtanforderungen zu genügen. Das Verschlussglied selbst besitzt möglichst wenig gegeneinander bewegte Teile, wodurch die Erzeugung von prozessschädlichen Partikeln, die insbesondere durch Reibung, vor allem durch Metallreibung und Abriebpartikel der Metallund Kunststoffelemente, weitgehend vermieden werden kann.

Wie aus den Figuren 6a und 6b ersichtlich, hat das beschriebene Ventil 101 jedoch den Nachteil, dass die beiden seitlich neben der Öffnung 103 angeordneten Seitenabschnitte 114a und 114b die Breite der Ventilgehäuses 102 im Verhältnis zu der Breite der Öffnung 103 erhöhen. Die U-förmigen Übergangsbereiche der beiden Dichtflächen 110 und 111 erhöhen somit die Erstreckung des Ventilgehäuses 102 in die Breite. Im Vergleich zu Schieberventilen des L-Typs mit einem L-förmigen Bewegungsablauf ist das beschriebene, linear verstellbare Ventil 101 verhältnismässig breit. Bei zahlreichen Anwendungen ist dies unproblematisch, jedoch gibt es Einsatzbereiche insbesondere von Transferventilen, in welchen die Öffnungsbreite möglichst gross unter Beibehaltung einer vorgegebenen Gehäusebreite sein sollte. Zwar wäre es möglich, die seitlichen Flanken der Hauptabschnitte 112a und 112b steiler ansteigen zu lassen und somit den Winkel zwischen den Flächennormalen 120 und der Verstellachse 106 zu vergrössern, wodurch sich die Ausrichtung der Dichtflächen 110 und 111 einer parallelen Ausrichtung zur Verstellachse 106 nähern, jedoch würde hierdurch die Längsbelastung der Dichtung entlang ihrem Längsverlauf im Bereich der steilen Flanken erhöht werden. Dies würde zwar die Baubreite des Ventils im Verhältnis zur Öffnungsbreite reduzieren, jedoch würde die Dichtung einem höheren Verschleiss unterliegen.

Ein grosser Vorteil des beschriebenen Ventils ist, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse 104 kaum in der Lage, auf das Verschlussglied 105 entlang der Öffnungsachse 104 auftretende Kräfte, die insbesondere bei grossem Differenzdruck auf das Verschlussglied 105 wirken können, aufzunehmen, was einen robusten Aufbau des Verschlussglieds 105, dessen Antriebs und dessen Lagerung erfordert.

Obwohl sich das beschriebene Ventil bereits durch eine ausserordentlich geringe Partikelgenerierung auszeichnet, wird ausserdem angestrebt, die Erzeugung von ungewollten Partikeln in dem Ventil weiter zu reduzieren.

Aufgabe der Erfindung ist es daher, ein Vakuumventil der eingangs genannten Art sowie ein entsprechendes Verschlussglied zu schaffen, das sich durch einen einfachen Aufbau, eine hohe Verstellgeschwindigkeit, eine geringe Beanspruchung der Dichtung, eine reduzierte Baubreite und eine erhöhte Belastbarkeit auszeichnet.

Diese Aufgabe wird durch die Verwirklichung der Merkmale der unabhängigen Ansprüche gelöst. Merkmale, welche die Erfindung in alternativer oder vorteilhafter Weise weiterbilden, sind den abhängigen Patentansprüchen zu entnehmen.

Das erfindungsgemässe Vakuumventil zum gasdichten Schliessen eines Fliesswegs mittels einer Linearbewegung umfasst ein Ventilgehäuse mit einer Öffnung für den Fliessweg und ein linear entlang einer Verstellachse verschiebbares Verschlussglied. Unter dem Fliessweg ist allgemein ein zu schliessender Öffnungspfad zwischen zwei Bereichen - insbesondere zwischen zwei Beschichtungsanlagen jeglicher Art, beispielsweise für Solar- oder sonstige Anwendungen, oder zwischen einer Prozesskammer zur Halbleiterfertigung und entweder einer weiteren Prozesskammer oder der Aussenwelt - zu verstehen. Der Fliessweg ist beispielsweise ein Verbindungsgang zwischen zwei miteinander verbundenen Prozesskammern, wobei die Prozesskammern mittels des Vakuumventils zum Transfer der Halbleiterteile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres meist rechteckigen Öffnungsquerschnitts auch als Rechteckschieber bezeichnet. Selbstverständlich ist jedoch auch jede beliebige andere Anwendung des erfindungsgemässen Vakuumventils zum im Wesentlichen gasdichten Schliessen eines beliebigen Fliesswegs möglich.

Die Öffnung kann einen beliebigen, insbesondere rechteckigen, kreisrunden oder ovalen Querschnitt aufweisen. Vorzugsweise ist das Vakuumventil als ein Transferventil mit einem länglichen, insbesondere im Wesentlichen rechteckigen Öffnungsquerschnitt ausgebildet, wobei die Breite der Öffnung senkrecht zu der Verstellachse vorzugsweise mindestens das Doppelte oder mindestens das Dreifache oder mindestens das Fünffache der Höhe der Öffnung parallel zu der Verstellachse beträgt. Es ist jedoch auch möglich, den Öffnungsquerschnitt anders auszugestalten, beispielsweise kreisrund, wobei das Vakuumventil zum Beispiel ein Pumpenventil ist. Die Öffnung hat eine Mittelachse, die sich im Bereich der Öffnung in der Mitte des Fliesswegs parallel zu diesem erstreckt. Diese geometrische Öffnungsachse steht beispielsweise senkrecht auf der von der Öffnung aufgespannten Fläche und erstreckt sich entlang des Fliesswegs.

Das Verschlussglied ist allgemein der Verschluss, mittels welchem die Öffnung gasdicht verschlossen werden kann. Das Verschlussglied, das als Ventilteller ausgebildet sein kann, ist das linear entlang einer zu der Öffnungsachse quer verlaufenden, geometrischen Verstellachse in einer Verschlussgliedebene zwischen einer geöffneten Position und einer geschlossenen Position verschiebbar. Vorzugsweise verläuft die Verstellachse senkrecht zu der Öffnungsachse und liegt auf einer Ebene, die senkrecht von der Öffnungsachse durchstossen wird. Alternativ verläuft die Verstellachse schräg und nichtparallel zu der Öffnungsachse, wobei der Schnittwinkel insbesondere zwischen 90 Grad und 45 Grad beträgt. Die geometrische Verstellachsel liegt auf der geometrischen Verschlussgliedebene. Die Verschlussgliedebene kann parallel zu einer von dem Verschlussglied definierten Verschlussfläche verlaufen und ist vorzugsweise im Wesentlichen parallel zu der von der Öffnung aufgespannten Fläche. Die Verschlussgliedebene ist allgemein als geometrische Ebene zu verstehen, auf welcher die Verstellachse liegt und zu welcher in einer speziellen Ausführungsform die Öffnungsachse eine Flächennormale bildet, unabhängig von der tatsächlichen Ausformung der Verschlussfläche, die nicht zwangsläufig eine Ebene bilden muss.

In der geöffneten Position des Verschlussgliedes gibt selbiges die Öffnung teilweise oder vollständig frei, indem es teilweise bzw. vollständig ausserhalb des Projektionsbereichs der Öffnung angeordnet ist. In der geschlossenen Position befindet sich das Verschlussglied vollständig im Projektionsbereich der Öffnung, wobei die Verschlussfläche des Verschlussglieds auf die Öffnung weist und diese vorzugsweise vollständig überdeckt. Die Verstellrichtung des Verschlussglieds entlang der Verstellachse von der geöffneten in die geschlossene Position wird als Schliessrichtung bezeichnet, wohingegen die entgegengesetzte Verstellrichtung von der geschlossenen Position in die geöffnete Position als Öffnungsrichtung definiert ist.

Die Öffnung wird von einer zumindest teilweise gekrümmten ersten Dichtfläche, die dem Ventilgehäuse zugeordnet ist, umschlossen. Dies bedeutet, dass rings um die Öffnung eine erste Dichtfläche angeordnet ist. Auf dem Verschlussglied befindet sich eine zweite Dichtfläche, deren Form der ersten Dichtfläche entspricht. Die zweite Dichtfläche korrespondiert also mit der ersten Dichtfläche, wobei die Dichtflächen eine einander entsprechende Form haben, so dass die zweite Dichtfläche auf der ersten Dichtfläche zum Liegen kommen kann, wobei die Dichtflächen entlang ihres Verlaufs einen konstanten Abstand in Richtung parallel zur Verstellachse haben. Die zweite Dichtfläche des Verschlussglieds umschliesst die Verschlussfläche des Verschlussglieds, welche derart dimensioniert ist, dass sie die Öffnung vollständig überdecken kann.

Die erste Dichtfläche und die zweite Dichtfläche liegen einander gegenüber, wobei der Abstand der Gegenüberlage durch Verstellen des Verschlussgliedes entlang der Verschlussachse verringert oder vergrössert werden kann.

In der geschlossenen Position des Verschlussglieds liegt die zweite Dichtfläche auf der ersten Dichtfläche auf, wobei durch ein Aufpressen der zweiten Dichtfläche auf die erste Dichtfläche in Schliessrichtung ein gasdichter Kontakt zwischen den Dichtflächen herrscht.

Die erste Dichtfläche und die zweite Dichtfläche setzen sich jeweils aus unterschiedlich geformten, jeweils zu der Verstellachse nichtparallelen Abschnitten zusammen. In anderen Worten weisen die Flächennormalen der Abschnitte der ersten Dichtfläche und der zweiten Dichtfläche jeweils Richtungskomponenten auf, die zu der Verstellachse parallel sind. Somit weist die erste Dichtfläche senkrecht oder schräg in die Öffnungsrichtung und die zweite Dichtfläche senkrecht oder schräg in die Schliessrichtung. Liegen die Dichtflächen in der geschlossenen Position aufeinander und werden in Schliessrichtung aufeinander gedrückt, so wird die dazwischen liegende Dichtung nicht ausschliesslich längs oder gar quer beansprucht, sondern stets auch zumindest teilweise senkrecht verpresst. Die einzelnen Abschnitte der ersten und zweiten Dichtfläche entsprechen einander insofern, als dass sie in der geschlossenen Position aufeinander aufliegen. Daher wird im Folgenden zu Teil nur der jeweilige Abschnitt der ersten Dichtfläche beschrieben.

Als Dichtflächen sind allgemein diejenigen Flächen des Ventilgehäuses und des Verschlussgliedes zu verstehen, die in der geschlossenen Position aufeinander liegen und den dichtenden Kontakt bilden. Die eine Dichtfläche kann somit von dem senkrecht nach aussen weisenden Abschnitt einer Dichtung, insbesondere einer O-Ring-Dichtung oder einer aufvulkanisierten Dichtung, gebildet werden und die andere Dichtfläche von einem Ventilsitz, also einer Auflagefläche für die Dichtung. Die Dichtflächen sind somit diejenigen Flächen, die tatsächlich die gasdichte Abdichtung durch gegenseitigen Kontakt in der geschlossenen Position bewirken.

Die erste Dichtfläche und die zweite Dichtfläche haben jeweils einen ersten Hauptabschnitt, der im Wesentlichen entlang einer geometrischen ersten Hauptebene verläuft. In anderen Worten erstreckt sich der erste Hauptabschnitt jeweils längs entlang der ersten Hauptebene. Der erste Hauptabschnitt kann sich gerade oder nicht gerade in der ersten Hauptebene oder im Wesentlichen entlang der ersten Hauptebene erstrecken. Insbesondere kann er eine Kurvenform aufweisen. Der erste Hauptabschnitt muss nicht zwangsläufig geometrisch exakt in der ersten Hauptebene verlaufen. Es ist möglich, dass er lediglich im Wesentlichen entlang der ersten Hauptebene, also geometrisch nicht exakt parallel zur Hauptebene, beispielsweise als Bogen entlang der ersten Hauptebene, verläuft.

Ausserdem haben die erste Dichtfläche und die zweite Dichtfläche jeweils einen zweiten Hauptabschnitt, der in einer speziellen Ausführungsform dem ersten Hauptabschnitt in seiner Formgebung im Wesentlichen entsprechen kann. Es ist jedoch auch möglich, dass die ersten Hauptabschnitte und die zweiten Hauptabschnitte unterschiedliche Formen aufweisen. Der jeweilige zweite Hauptabschnitt der ersten und zweiten Dichtfläche erstreckt sich entlang einer gemeinsamen geometrischen zweiten Hauptebene, wobei er ebenso wie der erste Hauptabschnitt gerade oder nicht gerade verlaufen kann und entweder exakt in der zweiten Hauptebene liegt oder lediglich im Wesentlichen entlang dieser verläuft.

Die geometrische erste Hauptebene und die geometrische zweite Hauptebene verlaufen im Wesentlichen zueinander parallel, wobei eine geringfügige Schieflage möglich ist, und haben zueinander zumindest im Bereich der Dichtflächen einen Abstand. Die erste und zweite Hauptebene liegen im Wesentlichen parallel zu der Verschlussgliedebene. Die Verschlussachse verläuft somit im Wesentlichen parallel zu der ersten und zweiten Hauptebene. Aufgrund des Abstands der beiden Hauptebenen haben der erste Hauptabschnitt und der gegenüberliegende zweite Hauptabschnitt zueinander einen geometrischen Versatz quer zu der Verstellachse, und zwar im Wesentlichen in Richtung der Öffnungsachse.

Zwischen dem ersten Hauptabschnitt und dem gegenüberliegenden zweiten Hauptabschnitt der ersten Dichtfläche des Ventilgehäuses ist in dem sich entlang der Verstellachse erstreckenden Bereich die Öffnung angeordnet. Zwischen dem ersten und dem zweiten Hauptabschnitt der zweiten Dichtfläche liegt die Verschlussfläche des Verschlussglieds.

Ein seitlicher erster U-förmiger Seitenabschnitt der ersten Dichtfläche verbindet den ersten Hauptabschnitt und den zweite Hauptabschnitt auf der einen Seite der ersten Dichtfläche miteinander, während ein seitlicher zweiter U-förmiger Seitenabschnitt der ersten Dichtfläche den ersten Hauptabschnitt und den zweiten Hauptabschnitt auf der anderen Seite der ersten Dichtfläche miteinander verbindet, wodurch die erste Dichtfläche geschlossen wird. Entsprechende U-förmige Seitenabschnitte sind auf der zweiten Dichtfläche angeordnet.

Der erste U-förmige Seitenabschnitt und der zweite U-förmige Seitenabschnitt setzen sich jeweils aus einem ersten Schenkel, der dem ersten Hauptabschnitt zugeordnet ist, einem zweiten Schenkel, der dem zweiten Hauptabschnitt zugeordnet ist und in einer speziellen Ausführungsform von dieser gebildet wird, und einer Basis zusammen. Diese Basis ist beispielsweise als zweidimensionaler Bogen, eine Ebene oder als dreidimensionales Segment einer Helix ausgebildet oder weist eine sonstige Form zur Verbindung der Schenkel auf.

Der erste Schenkel des ersten U-förmigen Seitenabschnitts der ersten Dichtfläche verläuft im Wesentlichen entlang einer ersten Schenkelebene des ersten U-förmigen Seitenabschnitts.

Auch der erste Schenkel des zweiten U-förmigen Seitenabschnitts der ersten Dichtfläche verläuft im Wesentlichen entlang einer ersten Schenkelebene des zweiten U-förmigen Seitenabschnitts. Diese beiden ersten Schenkelebenen der ersten Dichtfläche verlaufen parallel zu der Verstellachse. In anderen Worten verlaufen die beiden ersten Schenkel jeweils im Wesentlichen entlang zu der Verstellachse parallelen ersten Schenkelebenen. Wie auch im Falle der Hauptebenen ist es nicht zwangsläufig erforderlich, dass die ersten Schenkel exakt auf den ersten Schenkelebenen liegen. Beispielsweise ist ein leicht gebogener Verlauf der Schenkel entlang der Schenkelebene möglich.

Auch die beiden zweiten Schenkel der ersten Dichtfläche verlaufen jeweils im Wesentlichen entlang einer zweiten Schenkelebene, die jeweils zu der Verstellachse parallel verläuft. Diese zweiten Schenkeleben können in einer speziellen Ausführungsform von der zweiten Hauptebene gebildet werden.

Der erste Schenkel und der zweite Schenkel haben jeweils zueinander einen geometrischen Versatz quer zu der Verstellachse. Dieser Versatz kann in einer speziellen Ausführungsform dem Versatz der beiden Hauptabschnitte entsprechen. Die jeweilige Basis, welchen zwischen jeweils einem Schenkelpaar angeordnet ist, verbindet jeweils den ersten Schenkel und den zweiten Schenkel miteinander und überbrückt den geometrischen Versatz quer zu der Verstellachse.

Erfindungsgemäss sind die ersten Schenkelebenen jeweils um mindestens 30 Grad gegenüber der ihr zugeordneten, angrenzenden ersten Hauptebene abgewinkelt. In anderen Worten verlaufen die ersten Schenkel nicht in der ersten Hauptebene des ersten Hauptabschnitts, sondern sind aus dieser ersten Hauptebene um mindestens 30° herausgeklappt, wobei die Klappachse parallel zu der Verstellachse verläuft. Diese Klappachse bildet die jeweilige Schnittlinie der ersten Hauptebenen mit der jeweiligen ersten Schenkelebene. Um einen Übergang der ersten Dichtfläche vom ersten Hauptabschnitt zum jeweiligen ersten Schenkel zu ermöglichen, ist zwischen dem ersten Hauptabschnitt und den beiden ersten Schenkeln der ersten Dichtfläche jeweils ein erster Krümmungsabschnitt der ersten Dichtfläche angeordnet. Mittels dieses jeweiligen ersten Krümmungsabschnitts wird die erste Dichtfläche, die im ersten Hauptabschnitt entlang der erste Hauptebene verläuft, aus der ersten Hauptebene um die genannten mindestens 30 Grad hinausgeführt ist und geht in die erste Schenkelebene über. Der jeweilige erste Krümmungsabschnitt befindet sich also im Bereich der Klappachse und ermöglicht einen Übergang der Dichtfläche von der ersten Hauptebene in die erste Schenkelebene. Bei dem ersten Krümmungsabschnitt kann es sich um eine geometrische Krümmung handeln, beispielsweise einen Bogen, um einen Knick zwischen den Ebenen, oder um eine sonstige zwei- oder dreidimensionale Formung.

In einer Weiterbildung der Erfindung sind auch die beiden zweiten Schenkelebenen jeweils um mindestens 30 Grad gegenüber der zweiten Hauptebene abgewinkelt. Zwischen dem zweiten Hauptabschnitt und den beiden zweiten Schenkeln der ersten Dichtfläche ist jeweils ein zweiter Krümmungsabschnitt der ersten Dichtfläche angeordnet ist, in welchem die im zweiten Hauptabschnitt entlang der zweiten Hauptebene verlaufende erste Dichtfläche aus der zweiten Hauptebene um die mindestens 30 Grad hinausgeführt ist und in die zweite Schenkelebene übergeht. Der jeweilige zweite Krümmungsabschnitt kann dem benachbarten ersten Krümmungsabschnitt in seiner Form entsprechen oder anders ausgestaltet sein. In einer besonderen Ausführungsform verlaufen die jeweilige erste Schenkelebene und die jeweilige zweite Schenkelebene des ersten U-förmigen Seitenabschnitts im Wesentlichen parallel zueinander, wobei in einer weiteren Ausführungsform auch die jeweilige erste Schenkelebene und die zweite Schenkelebene des zweiten U-förmigen Seitenabschnitts im Wesentlichen parallel zueinander verlaufen.

In anderen Worten unterscheidet sich die Erfindung von dem eingangs beschriebenen Vakuumventil zum gasdichten Schliessen eines Fliesswegs mittels einer Linearbewegung insbesondere dadurch, dass die beiden Seitenabschnitte, in welchen der geometrische Versatz der beiden Hauptabschnitte quer zu der Verstellachse überbrückt wird und die versetzen Hauptabschnitte zusammengeführt werden, nach innen in Richtung zur Öffnungsachse geklappt sind, und zwar um mindestens 30 Grad. Dieses vorzugsweise um eine zur Verstellachse im Wesentlichen parallele Klappachse erfolgte Klappen der Seitenabschnitte nach innen bewirkt, dass sich der Übergangsbereich der versetzten Dichtungsabschnitte auch in Richtung der Öffnungsachse und nicht nur quer zu dieser erstreckt. In einer besonderen Ausführungsform, insbesondere bei einem Klappwinkel von 90 Grad, erstreckt sich dieser Übergangsbereich sogar ausschliesslich entlang der Öffnungsachse. Somit wird das Ventilgehäuse bei gleich bleibender Öffnungsbreite schmäler, wobei die Tiefe des Ventilgehäuses und des Verschlussgliedes etwas vergrössert wird.

Überraschenderweise hat sich gezeigt, dass sich durch dieses Klappen der Seitenabschnitte nach innen noch zahlreiche weitere, erhebliche Vorteile ergeben. So erweist sich die beschriebene dreidimensionale Erstreckung der Dichtfläche als eine besonders steife Ausgestaltung für das Verschlussglied und das Ventilgehäuse, so dass es möglich ist, eine noch grössere Längenausdehnung umzusetzen, wobei Verformungen bei hohen Druckdifferenzen weitgehend vermieden werden können. Somit kann die Öffnungsbreite erheblich vergrössert werden, was vor allem bei Transferventilen für den Transfer von breiten Halbleiter- und Substrateinheiten besonders vorteilhaft ist. Ausserdem bewirkt das Klappen der Seitenabschnitte nach innen, dass die im Stand der Technik ausschliesslich in Schliessrichtung belastbare Dichtung nun auch in eine Richtung entlang der Öffnungsachse belastet werden kann, da die Dichtung in den Seitenabschnitten in diesem Falle nicht mehr ausschliesslich quer zu ihrer Längserstreckung, sondern sowohl senkrecht als auch in Längsrichtung beansprucht wird. Somit kann die Dichtung einen Teil der Kraft, welche bei einer Druckdifferenz auf das Verschlussglied wirkt, aufnehmen. Die erfindungsgemässe Dichtgeometrie ist weitgehend unempfindlich gegen Differenzdruck.

Durch die gewonnene Breite im Ventilgehäuse ist es zudem möglich, den seitlichen Bauraum zum Einbau des Linearantriebs zu nutzen. Der Linearantrieb wird somit aus dem kritischen Partikelbereich herausgeführt, so dass die Partikelgenerierung weiter reduziert wird. Das Ventil zeichnet sich durch diese Anordnung der Antriebe zudem durch eine kompakte Bauweise aus. Durch eine direkte Bewegungsübertragung sind hohe Beschleunigungen möglich.

Erfindungsgemäss sind die ersten Schenkelebenen und/oder die zweiten Schenkelebenen um mindestens 30 Grad gegenüber der Hauptebene abgewinkelt, also aus der ersten Hauptebene bzw. zweiten Hauptebene herausgeklappt. In einer Weiterbildung der Erfindung beträgt dieser Winkel mindestens 45 Grad oder mindestens 60 Grad. Der Winkel sollte maximal 120 Grad, vorzugsweise maximal 90 Grad betragen.

Die Hauptabschnitte können einen beliebigen Verlauf entlang der Hauptebenen haben. Beispielsweise können sie bogenförmig auf der jeweiligen Hauptebene verlaufen, wie bei dem eingangs beschrieben, aus dem Stand der Technik bekannten Vakuumschieber der Fall.

In einer vor allem für ein Transferventil bevorzugten Weiterbildung der Erfindung verlaufen die Hauptabschnitte jedoch gerade entlang den Hauptebenen. Der erste Hauptabschnitt erstreckt sich geradlinig auf einer ersten Horizontalebene, zu welcher die Verstellachse eine Flächennormale bildet. Der zweite Hauptabschnitt verläuft geradlinig auf einer zweiten Horizontalebene, zu welcher ebenfalls die Verstellachse eine Flächennormale bildet. Die erste Horizontalebene und die zweite Horizontalebene liegen zueinander parallel und sind zueinander beabstandet. Die Hauptebenen liegen bei dieser Ausführungsform vorzugsweise senkrecht zu den Horizontalebenen. Die Horizontalebenen sind nicht auf einen absoluten Horizont des Weltkoordinatensystems bezogen, sondern beziehen sich auf das Ventilgehäuse und dessen Breitenerstreckung. Die beiden Hauptabschnitte verlaufen somit vorzugsweise parallel zueinander. Um diesen Versatz der Hauptebenen in Richtung der Verstellachse zu überbrücken, erstrecken sich die beiden ersten Schenkel, die beiden zweiten Schenkel und die beiden Basen zwischen der ersten Horizontalebene und der zweiten Horizontalebene, wobei die beiden ersten Schenkel und/oder die beiden zweiten Schenkel und/oder die beiden Basen den Abstand zwischen der ersten Horizontalebene und der zweiten Horizontalebene durch zumindest teilweise Erstreckung in Richtung parallel zur Verstellachse zumindest teilweise überbrücken.

In einer speziellen Weiterbildung verlaufen die beiden Basen auf einer gemeinsamen dritten Horizontalebene, welche zwischen der ersten Horizontalebene und der zweiten Horizontalebene liegt und zu welcher die Verstellachse eine Flächennormale bildet. In anderen Worten verläuft die dritte Horizontalebene parallel zu den anderen Horizontalebenen und ist in einer speziellen Weiterbildung der Erfindung mittig zwischen der ersten Horizontalebene und der zweiten Horizontalebene angeordnet. Da die Basen auf der dritten Horizontalebene liegen, erstrecken sie sich bei dieser Erfindungsvariante nicht entlang der Verstellachse und tragen zu der genannten Überbrückung des Abstands der Hauptabschnitte in Richtung parallel zur Verstellachse nicht bei. In einer alternativen Variante liegen die Basen jedoch auf keiner Horizontalebene. Die beiden Basen überbrücken den Abstand zwischen der ersten Horizontalebene und der zweiten Horizontalebene hingehen teilweise, indem sie jeweils als ein sich insbesondere im Wesentlichen parallel zu der Verstellachse erstreckendes Segment einer Helix ausgebildet sind.

Die beiden ersten Krümmungsabschnitte der ersten Dichtfläche können auf der ersten Hauptebene und die beiden zweiten Krümmungsabschnitte auf der zweiten Hauptebene verlaufen. In diesem Fall überbrücken die Krümmungsabschnitte den Versatz der Hauptabschnitte in Richtung parallel zur Verstellachse nicht. Es ist jedoch auch möglich, dass die Krümmungsabschnitte nicht nur um eine Krümmungsachse, die parallel zu der Verstellachse verläuft, gekrümmt sind, wie oben bereits beschrieben, sondern auch um eine Krümmungsachse, die quer zur Verstellachse liegt. In diesem Fall wird die erste Dichtfläche auch nach innen in Richtung zum gegenüberliegenden Abschnitt der ersten Dichtfläche gekrümmt. Somit erstrecken sich die beiden ersten Krümmungsabschnitte und die beiden zweiten Krümmungsabschnitte zwischen der ersten Horizontalebene und der zweiten Horizontalebene, wobei die beiden ersten Krümmungsabschnitte und die beiden zweiten Krümmungsabschnitte den Abstand zwischen der ersten Horizontalebene und der zweiten Horizontalebene teilweise überbrücken. Die beschrieben Krümmung kann beispielsweise dadurch erreicht werden, indem die beiden ersten Krümmungsabschnitte und die beiden zweiten Krümmungsabschnitte als ein sich im Wesentlichen parallel zu der Verstellachse erstreckendes Segment einer Helix ausgebildet sind.

Ausserdem umfasst die Erfindung ein Verschlussglied, insbesondere des eingangs beschriebenen erfindungsgemässen Vakuumventils. Da die Merkmale des Verschlussglieds bereits in Zusammenhang mit dem Vakuumventil und dessen unterschiedlichen erfindungsgemässen Weiterbildungen direkt oder indirekt beschrieben wurde, wird auf die oben gemachten Ausführungen verwiesen.

Allgemein umfasst das Verschlussglied zum gasdichten Schliessen eines Fliesswegs mittels einer Linearbewegung eine geometrische Verstellachse in einer Verschlussgliedebene und eine zweite Dichtfläche, die sich aus unterschiedlich geformten, jeweils zu der Verstellachse nichtparallelen Abschnitten zusammensetzt. Die Flächennormalen der Abschnitte der zweiten Dichtfläche weisen zu der Verstellachse jeweils parallele Richtungskomponenten auf. Somit weist die zweite Dichtfläche senkrecht oder schräg in eine Öffnungsrichtung der Verstellachse. Ein erster Hauptabschnitt der zweiten Dichtfläche verläuft im Wesentlichen entlang einer geometrischen ersten Hauptebene, während ein zweiter Hauptabschnitt der zweiten Dichtfläche im Wesentlichen entlang einer geometrischen zweiten Hauptebene verläuft. Die erste Hauptebene und die zweite Hauptebene sind zueinander beabstandet und verlaufen parallel zu der Verschlussgliedebene. Somit weisen der erste Hauptabschnitt und der gegenüberliegende zweite Hauptabschnitt zueinander einen geometrischen Versatz quer zu der Verstellachse auf. Zwischen den beiden gegenüberliegenden Hauptabschnitten ist eine insbesondere im Wesentlichen parallel zu der Verschlussgliedebene verlaufende Verschlussfläche des Verschlussgliedes angeordnet. Ein seitlicher erster U-förmiger Seitenabschnitt der zweiten Dichtfläche verbindet den ersten Hauptabschnitt und den zweiten Hauptabschnitt auf der einen Seite der zweiten Dichtfläche, während ein seitlicher zweiter U-förmiger Seitenabschnitt der zweiten Dichtfläche den ersten Hauptabschnitt und den zweiten Hauptabschnitt auf der anderen Seite der zweiten Dichtfläche verbindet. Der erste U-förmige Seitenabschnitt und der zweite U-förmige Seitenabschnitt setzen sich jeweils aus einem ersten Schenkel, der dem ersten Hauptabschnitt zugeordnet ist, einem zweiten Schenkel, der dem zweiten Hauptabschnitt zugeordnet ist, und einer Basis zusammen. Die beiden ersten Schenkel verlaufen jeweils im Wesentlichen entlang ersten Schenkelebenen, die zu der Verstellachse parallel liegen. Der erste Schenkel und der zweite Schenkel haben zueinander einen geometrischen Versatz quer zu der Verstellachse, wobei die jeweilige Basis jeweils den ersten Schenkel und den zweiten Schenkel verbindet und den geometrischen Versatz quer zu der Verstellachse überbrückt. Mittels der zweiten Dichtfläche ist in einer geschlossenen Position des Verschlussglieds ein dichtender Kontakt mit einer ersten Dichtfläche eines Vakuumventils zum gasdichten Verschliessen einer Öffnung des Vakuumventils herstellbar, indem die zweite Dichtfläche linear auf die erste Dichtfläche in eine Schliessrichtung der Verstellachse gedrückt wird.

Wie auch im Falle des Vakuumventils, welches das beschriebene Verschlussglied aufweist, sind bei dem erfindungsgemässen Verschlussglied die beiden ersten Schenkelebenen jeweils um mindestens 30 Grad gegenüber der ersten Hauptebene abgewinkelt. Zwischen dem ersten Hauptabschnitt und den beiden ersten Schenkeln ist jeweils ein erster Krümmungsabschnitt der zweiten Dichtfläche angeordnet. Mittels dieser ersten Krümmungsabschnitte wird jeweils die im ersten Hauptabschnitt entlang der ersten Hauptebene verlaufende zweite Dichtfläche aus der ersten Hauptebene um die mindestens 30 Grad insbesondere mittels einer geometrischen Krümmung hinausgeführt, wobei die zweite Dichtfläche in die erste Schenkelebene übergeht.

Das Verschlussglied weist die gleichen erfindungsgemässen Weiterbildungsvarianten auf, welche bereits in Zusammenhang mit dem Vakuumventil beschrieben wurden und auf welche hiermit verwiesen sei. Insbesondere umfasst eine Weiterbildung, dass die beiden zweiten Schenkel im Wesentlichen entlang zu der Verstellachse parallelen zweiten Schenkelebenen verlaufen, die beiden zweiten Schenkelebenen jeweils um mindestens 30 Grad gegenüber der zweiten Hauptebene abgewinkelt sind und zwischen dem zweiten Hauptabschnitt und den beiden zweiten Schenkeln jeweils ein zweiter Krümmungsabschnitt der zweiten Dichtfläche angeordnet ist. In diesem zweiten Krümmungsabschnitt ist die im zweiten Hauptabschnitt entlang der zweiten Hauptebene verlaufende zweite Dichtfläche aus der zweiten Hauptebene um die mindestens 30 Grad insbesondere mittels einer geometrischen Krümmung hinausgeführt und geht in die zweite Schenkelebene über. Ausserdem ist es erfindungsgemäss möglich, dass die erste Schenkelebene und die zweite Schenkelebene des ersten U-förmigen Seitenabschnitts im Wesentlichen parallel zueinander und ausserdem die erste Schenkelebene und die zweite Schenkelebene des zweiten U-förmigen Seitenabschnitts im Wesentlichen parallel zueinander verlaufen.

Weiterbildungen, die bereits in Zusammenhang mit dem Vakuumventil beschrieben wurden, werden ebenfalls von der Erfindung, die das Verschlussglied betrifft, umfasst und es wird auf die obigen Ausführungen verwiesen.

Die erfindungsgemässe Vakuumventil und das erfindungsgemässe Verschlussglied werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen zeigen:
- Figur 1a: ein Ventilgehäuse einer ersten Ausführungsform des erfindungsgemässen Vakuumventils in einer Schrägansicht im Halbschnitt;
- Figur 1b: das Ventilgehäuse in einem seitlichen Querschnitt;
- Figur 2a: ein erfindungsgemässes Verschlussglied der ersten Ausführungsform des erfindungsgemässen Vakuumventils in einer Draufsicht;
- Figur 2b: das Verschlussglied in einer Frontansicht;
- Figur 2c: das Verschlussglied in einer Seitenansicht;
- Figur 2d: das Verschlussglied in einer Schrägansicht;
- Figur 2e: einen Abschnitt des Verschlussglieds in einer Detail-Draufsicht;
- Figur 3a: die erste Ausführungsform des erfindungsgemässe Vakuumventils mit dem Verschlussglied in geschlossener Position in einer Frontansicht;
- Figur 3b: das Vakuumventil aus Figur 3a in einem seitlichen Querschnitt;
- Figur 3c: die erste Ausführungsform des erfindungsgemässe Vakuumventils mit dem Verschlussglied in offenen Position in einer Frontansicht;
- Figur 3d: das Vakuumventil aus Figur 3c in einem seitlichen Querschnitt;
- Figur 3e: die erste Ausführungsform des erfindungsgemässe Vakuumventils mit dem Verschlussglied in geschlossener Position in einer Schrägansicht;
- Figur 4a: eine zweite Ausführungsform des erfindungsgemässen Vakuumventils mit dem Verschlussglied in offener Position in einem seitlichen Querschnitt;
- Figur 4b: ein Ventilgehäuse der zweiten Ausführungsform des erfindungsgemässen Vakuumventils in einer Schrägansicht im Halbschnitt;
- Figur 5a: ein erfindungsgemässes Verschlussglied der zweiten Ausführungsform des erfindungsgemässen Vakuumventils in einer Draufsicht;
- Figur 5b: das Verschlussglied in einer Frontansicht;
- Figur 5c: das Verschlussglied in einer Seitenansicht;
- Figur 5d: das Verschlussglied in einer Schrägansicht;
- Figur 5e: einen Abschnitt des Verschlussglieds in einer Detail-Draufsicht;
- Figur 6a: ein aus dem Stand der Technik bekanntes Ventilgehäuse eines Vakuumschiebers; und
- Figur 6b: ein aus dem Stand der Technik bekanntes Verschlussglied eines Vakuumschiebers.

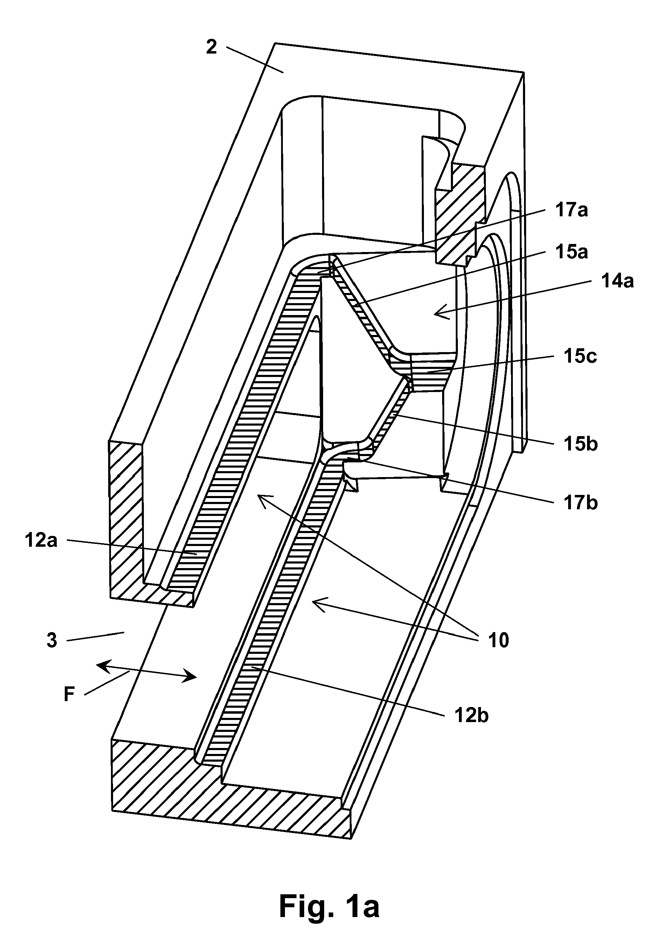

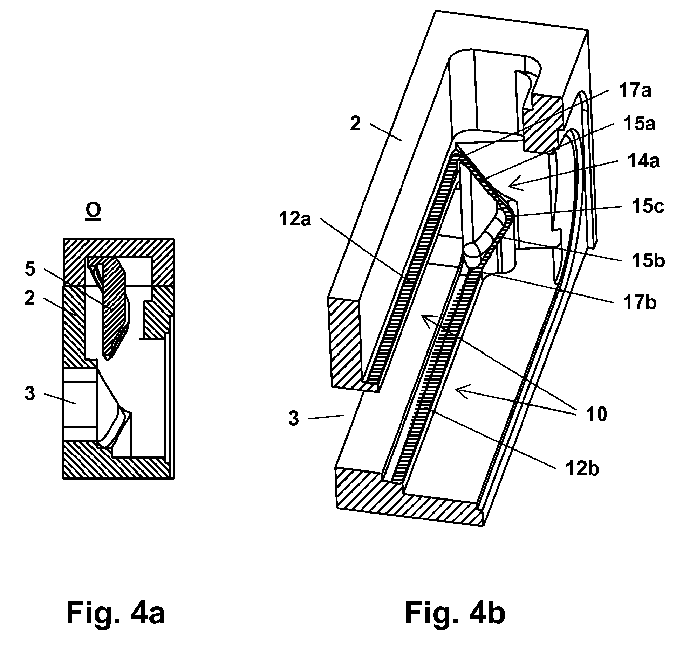

Die Figuren 1a bis 3e und die Figuren 4a bis 5e zeigen jeweils eine gemeinsame, exemplarische Ausführungsform eines erfindungsgemässen Vakuumventils bzw. eines Verschlussglieds in unterschiedlichen Zuständen, aus unterschiedlichen Ansichten und in unterschiedlichen Detaillierungsgraden. Daher werden diese Figurengruppen jeweils gemeinsam beschrieben. Das Ausführungsbeispiel gemäss Figuren 4a bis 5e unterscheidet sich lediglich bezüglich bestimmter Merkmale von dem Ausführungsbeispiel gemäss den Figuren 1a bis 3e, weshalb teilweise nur auf die Unterschiede der beiden Ausführungsformen eingegangen wird. Zum Teil wird auf bereits in vorangegangenen Figuren erläuterte Bezugszeichen und Merkmale nicht erneut eingegangen. Auf die Figuren 6a und 6b wurde bereits in Zusammenhang mit der Darstellung des Standes der Technik eingegangen.

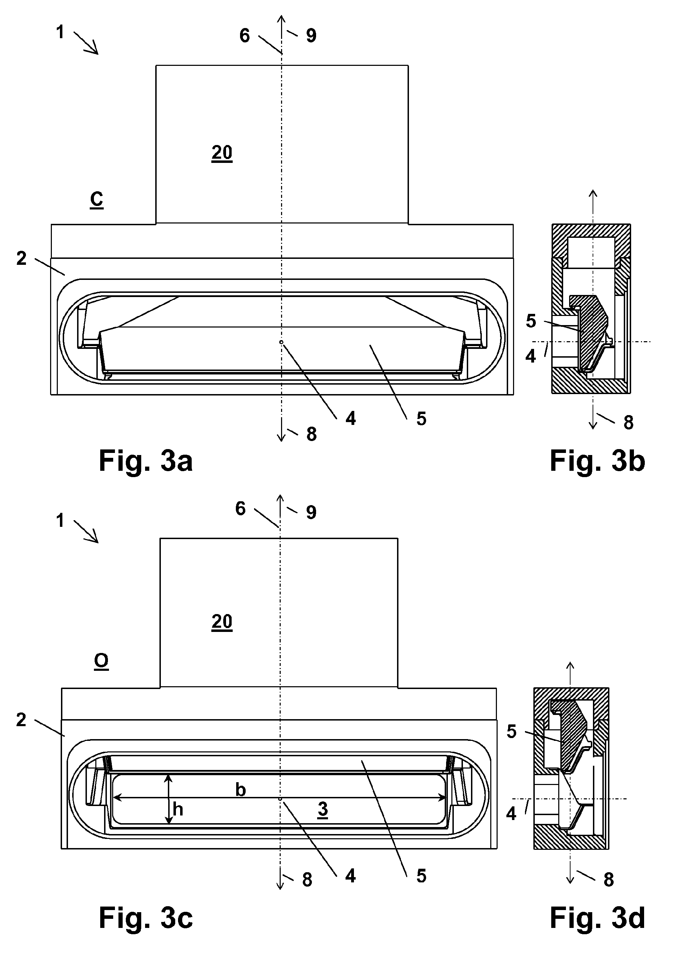

In den Figuren 1a bis 3e ist eine erste Ausführungsform des Vakuumventils 1 und dessen Verschlussglieds 5 dargestellt. Mittels des Vakuumventils 1 kann ein Fliessweg F, der durch eine Öffnung 3 eines Ventilgehäuses 2 führt, mittels einer Linearbewegung des Verschlussgliedes 5 gasdicht verschlossen werden. In dem Ventilgehäuse 2 ist die Öffnung 3 für den Fliessweg F in Form eines rechteckigen Durchgangs aufgeformt, wobei die Breite b der Öffnung 3 im gezeigten Ausführungsbeispiel etwa das Sechsfache der Höhe h der Öffnung 3 beträgt, wie in Figur 3c gezeigt. Das Vakuumventil 1 ist als ein Transferventil ausgebildet.

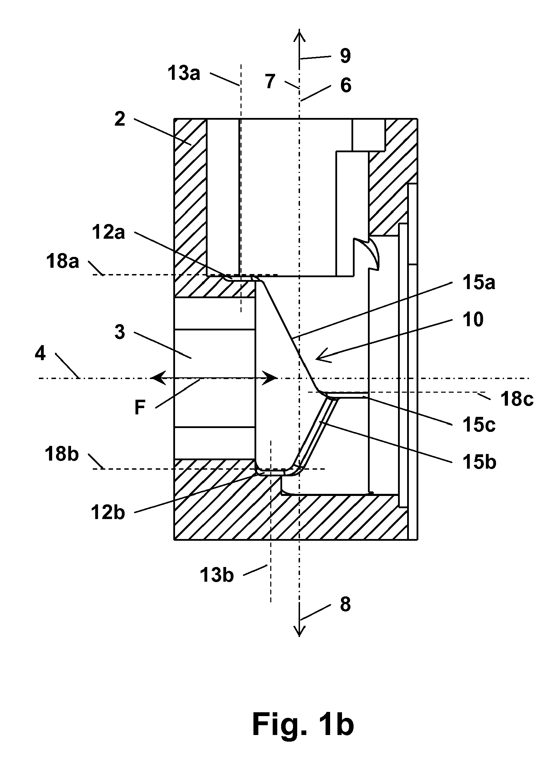

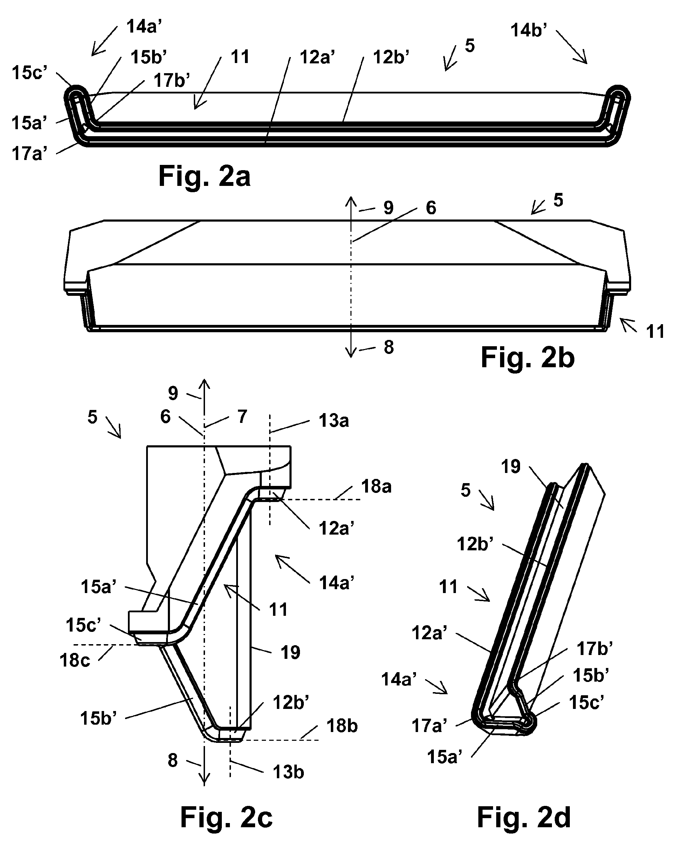

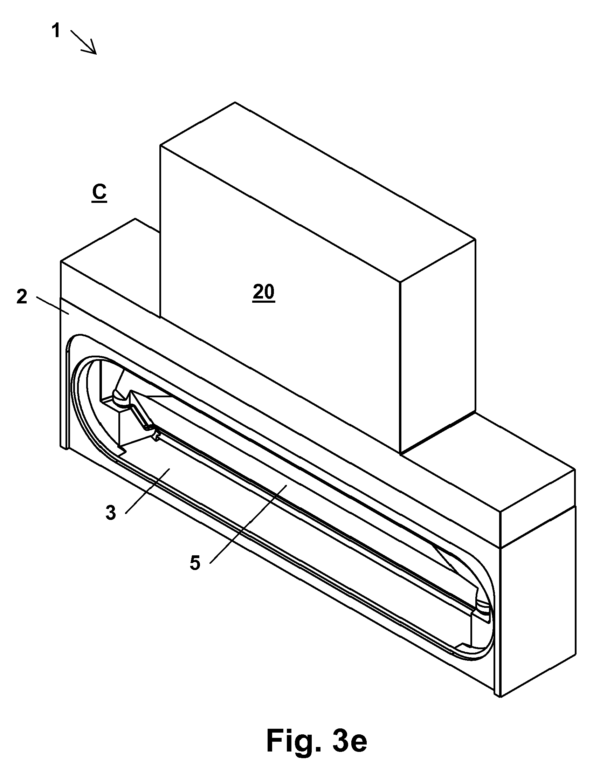

Durch die Öffnung 3 entlang des Fliesswegs F läuft eine geometrische Öffnungsachse 4, die sich entlang des Verlaufs der Öffnung 3 durch das Ventilgehäuse 2 mittig erstreckt, wie in Figur 1b gezeigt. Wie in den Figuren 3a bis 3e gezeigt, ist das im Ventilgehäuse 2 angeordnete Verschlussglied 5 in Form eines Ventiltellers linear entlang einer geometrischen Verstellachse 6 verstellbar. Die Verstellachse 6 verläuft quer, nämlich senkrecht zu der Öffnungsachse 4 in einer Verschlussgliedebene 7, die in den Figuren 1b und 2c mittels der Strichpunktlinie dargestellt ist. Das Verschlussglied 5 ist mittels eines Antriebs 20 von einer geöffneten Position O in welcher die Öffnung 3 freigegeben ist, wie in den Figuren 3c und 3d gezeigt, in eine über die Öffnung 3 linear geschobene, geschlossene Position C, wie in den Figuren 3a, 3b und 3e veranschaulicht, in eine Schliessrichtung 8 linear entlang der Verstellachse 6 verschiebbar. Durch lineares Verschieben des Verschlussgliedes 5 in die entgegengesetzte Öffnungsrichtung 9 kann es von der geschlossenen Position C zurück in die geöffnete Position O linear verschoben werden.

Die Öffnung 3 des Ventilgehäuses 2 wird von einer zumindest teilweise gekrümmten ersten Dichtfläche 10 des Ventilgehäuses 2 umschlossen, wie in der Figur 1a anhand der gestrichelten Fläche gezeigt. Das Verschlussglied 5 hat eine zu dieser ersten Dichtfläche 10 korrespondierende zweite Dichtfläche 11, die eine der ersten Dichtfläche 10 entsprechende Form hat, wie in den Figuren 2a bis 2e dargestellt.

Wie in den Figuren 3a und 3b gezeigt, besteht zwischen der zweiten Dichtfläche 11 und der ersten Dichtfläche 10 in der geschlossenen Position C ein gasdichter Kontakt, indem die zweite Dichtfläche 11 in Schliessrichtung 8 auf die erste Dichtfläche 10 gedrückt wird, so dass das Verschlussglied 5 mit seiner Verschlussfläche 19 die Öffnung 3 gasdicht verschliesst. Der dichtende Kontakt wird beispielsweise ermöglicht, indem eine der beiden Dichtfläche als elastische Dichtung, beispielsweise als 0-Ring oder aufvulkanisiert Dichtung ausgebildet ist oder eine solche Dichtung trägt. Diese Dichtung kann entweder auf dem Verschlussglied 5, wie in den Figuren gezeigt, oder auf dem Ventilgehäuse 2 angeordnet sein. In anderen Worten kann entweder die erste Dichtfläche 10 die Dichtung und die zweite Dichtfläche 11 den Ventilsitz, auf welchem die Dichtfläche gasdichtend aufliegen kann, bilden, oder umgekehrt. Unterschiedliche Dichtmaterialen und Dichtungstypen sind aus dem Stand der Technik bekannt um müssen an dieser Stelle nicht weiter erläutert werden.

Die erste Dichtfläche 10 des Ventilgehäuses 2 setzt sich aus unterschiedlich geformten, jeweils zu der Verstellachse 6 nichtparallelen Abschnitten 12a, 12b, 14a, 14b, 17a, 17b zusammen, wie im Folgenden detaillierter erläutert. Die Flächennormalen all dieser Abschnitte 12a, 12b, 14a, 14b, 17a, 17b der ersten Dichtfläche 10 haben zu der Verstellachse 6 jeweils parallele Richtungskomponenten. Somit weist die erste Dichtfläche 10 senkrecht oder schräg in die Öffnungsrichtung 9, wie aus der Figuren 1a und 1b ersichtlich. In den Figuren weist die gesamte erste Dichtfläche 10 somit nach oben.

Auch die zweite Dichtfläche 11 des Verschlussgliedes besitzt unterschiedlich geformte, jeweils zu der Verstellachse 6 nichtparallelen Abschnitte 12a', 12b', 14a', 14b', 17a', 17b', die den Abschnitten 12a, 12b, 14a, 14b, 17a, 17b der ersten Dichtfläche 10 entsprechen, wie in den Figuren 2a bis 2e gezeigt. Auch die Flächennormalen dieser Abschnitte 12a', 12b', 14a', 14b', 17a', 17b' der zweiten Dichtfläche 11 haben zu der Verstellachse 6 jeweils parallele Richtungskomponenten, so dass die zweite Dichtfläche 11 senkrecht oder schräg in eine Öffnungsrichtung 9 der Verstellachse 6 weist. Im gezeigten Ausführungsbeispiel weist also die zweite Dichtfläche 11 nach unten.

Die erste Dichtfläche 10 setzt sich entlang ihres Verlaufs aus einem ersten Hauptabschnitt 12a, einem ersten Krümmungsabschnitt 17a, einem ersten U-förmigen Seitenabschnitt 14a, der wiederum einen ersten Schenkel 15a, eine Basis 15c und einen zweiten Schenkel 15b beinhaltet, einen zweiten Krümmungsabschnitt 17b, einen zweiten Hauptabschnitt 12b, einen weiteren zweiten Krümmungsabschnitt 17b, einen zweiten U-förmigen Seitenabschnitt 14b, der wiederum einen zweiten Schenkel 15b, eine Basis 15c und einen ersten Schenkel 15a beinhaltet, und einen weiteren ersten Krümmungsabschnitt 17a, der wiederum mit dem anderen Ende des ersten Hauptabschnitts 12a verbunden ist, zusammen, wie in Figur 1a gezeigt.

Entsprechend der ersten Dichtfläche 10 setzt sich auch die zweite Dichtfläche 11 des Verschlussgliedes 5 entlang ihres Verlaufs aus einem ersten Hauptabschnitt 12a', einem ersten Krümmungsabschnitt 17a', einem ersten U-förmigen Seitenabschnitt 14a', der wiederum einen ersten Schenkel 15a', eine Basis 15c' und einen zweiten Schenkel 15b' beinhaltet, einen zweiten Krümmungsabschnitt 17b', einen zweiten Hauptabschnitt 12b', einen weiteren zweiten Krümmungsabschnitt 17b', einen zweiten U-förmigen Seitenabschnitt 14b', der wiederum einen zweiten Schenkel 15b', eine Basis 15c' und einen ersten Schenkel 15a' beinhaltet, und einen weiteren ersten Krümmungsabschnitt 17a', der wiederum mit dem anderen Ende des ersten Hauptabschnitts 12a' verbunden ist, zusammen, wie in den Figuren 2a bis 2e dargestellt. Da die Abschnitte einander entsprechen, werden im Folgenden zum Teil nur die Abschnitte der ersten Dichtfläche 10 genauer erläutert.

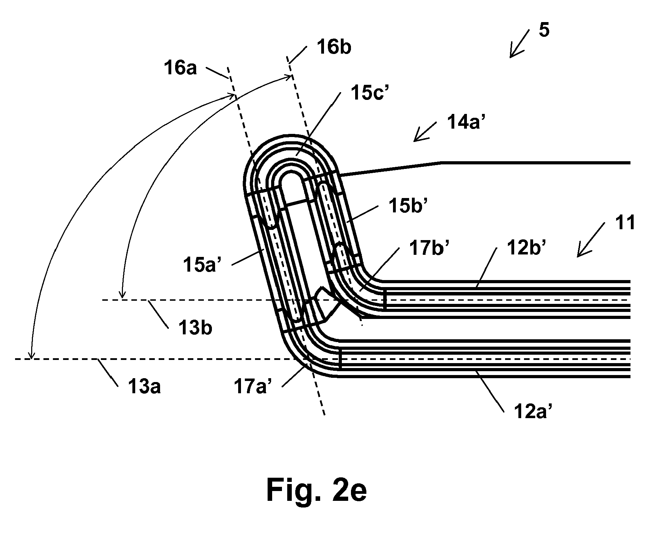

Der erste Hauptabschnitt 12a der ersten Dichtfläche 10 und der erste Hauptabschnitt 12a der zweiten Dichtfläche 11 verlaufen im Wesentlichen entlang einer geometrischen ersten Hauptebene 13a, wie in den Figuren 1b bzw. 2c und 2e gezeigt. Auch der zweite Hauptabschnitt 12b der ersten Dichtfläche 10 und der zweite Hauptabschnitt 12b' der zweiten Dichtfläche 11 erstrecken sich im Wesentlichen entlang einer geometrischen zweiten Hauptebene 13b. Die erste Hauptebene 13a und die zweite Hauptebene 13b liegen parallel zueinander und haben einen Abstand. Sie verlaufen parallel zu der Verschlussgliedebene 7. Der erste Hauptabschnitt 12a bzw. 12a' und der gegenüberliegende zweite Hauptabschnitt 12b bzw. 12b' haben zueinander einen geometrischen Versatz quer zu der Verstellachse 6, wie in den Figuren 1a und 1b bzw. 2a, 2c, 2d und 2e gezeigt. Zwischen den beiden gegenüberliegenden Hauptabschnitten 12a und 12b der ersten Dichtfläche 10 liegt die Öffnung 3, Figur 1a, und zwischen den beiden gegenüberliegenden Hauptabschnitten 12a' und 12b' der zweiten Dichtfläche 11 die Verschlussfläche 19 des Verschlussgliedes 5, Figuren 2c und 2d.

Der seitliche erste U-förmige Seitenabschnitt 14a der ersten Dichtfläche 10 bzw. der seitliche erste U-förmige Seitenabschnitt 14a' der zweiten Dichtfläche 11 verbindet den ersten Hauptabschnitt 12a bzw. 12a' und den zweiten Hauptabschnitt 12b bzw. 12b' auf der einen Seite der jeweiligen Dichtfläche 10 bzw. 11, während der seitliche zweite U-förmige Seitenabschnitt 14b der ersten Dichtfläche 10 bzw. der seitliche zweite U-förmige Seitenabschnitt 14b' der zweiten Dichtfläche 11 den ersten Hauptabschnitt 12a bzw. 12a' und den zweiten Hauptabschnitt 12b bzw. 12b' auf der einen Seite der jeweiligen Dichtfläche 10 bzw. 11 verbindet, wie in den Figuren 1a bzw. 2a dargestellt.

Der erste U-förmige Seitenabschnitt 14a bzw. 14a' und der zweite U-förmige Seitenabschnitt 14b bzw. 14b' haben jeweils den ersten Schenkel 15a bzw. 15a', der dem ersten Hauptabschnitt 12a bzw. 12a' zugeordnet ist, und den dem zweiten Hauptabschnitt 12b bzw. 12b' zugeordneten zweiten Schenkel 15b bzw. 15b', sowie die Basis 15c bzw. 15c', die als Bogen ausgebildet ist. Die beiden ersten Schenkel 15a bzw. 15a' auf der einen Seite und der anderen Seite der jeweiligen Dichtfläche verlaufen jeweils im Wesentlichen entlang zu ersten Schenkelebenen 16a, die zu der Verstellachse 6 parallel liegen. Eine der beiden ersten Schenkelebene 16a ist in Figur 2e in Form der gestichtelten Linie dargestellt.

Auch die beiden zweiten Schenkel 15b bzw. 15b' erstrecken sich im Wesentlichen entlang zweiter Schenkelebenen 16b, die zu der Verstellachse 6 parallel verlaufen, wie ebenfalls in Figur 2e gezeigt. Wie dort erkennbar, verlaufen die erste Schenkelebene 16a und die zweite Schenkelebene 16b sowohl des ersten U-förmigen Seitenabschnitts 14a bzw. 14a', als auch des zweiten U-förmigen Seitenabschnitts 14b bzw. 14b' im Wesentlichen parallel zueinander. Der erste Schenkel 15a bzw. 15a' und der zweite Schenkel 15b bzw. 15b' haben somit zueinander einen geometrischen Versatz quer zu der Verstellachse 6. Die jeweilige bogenförmige Basis 15c bzw. 15c' verbindet jeweils den ersten Schenkel 15a bzw. 15a' und den zweiten Schenkel 15b bzw. 15b' miteinander und überbrückt den geometrischen Versatz quer zu der Verstellachse 6.

Sowohl die beiden ersten Schenkelebenen 16a, als auch die beiden zweiten Schenkelebenen 16b sind jeweils um über 30 Grad, nämlich im gezeigten Ausführungsbeispiel um etwa 70 Grad, gegenüber der ersten Hauptebene 13a bzw. der zweiten Hauptebene 13b abgewinkel, wie insbesondere in Figur 2a und 2e gezeigt. In Figur 2e ist der jeweilige Klappwinkel anhand der gebogenen Winkelpfeile veranschaulicht. In anderen Worten sind die Seitenabschnitte 14a, 14a', 14b, 14b' jeweils um etwa 70 Grad um jeweils eine geometrische Klappachse, die parallel zu der Verstellachse 6 verläuft, nach innen aufeinander zu geklappt, wie beispielsweise in Figur 2a gezeigt.

Zwischen dem ersten Hauptabschnitt 12a bzw. 12a' und den beiden ersten Schenkeln 15a bzw. 15a' ist jeweils der erste Krümmungsabschnitt 17a bzw. 17a' der ersten Dichtfläche 10 bzw. der zweiten Dichtfläche 11 angeordnet. In diesem jeweiligen Krümmungsabschnitt 17a bzw. 17b, der im gezeigten Aufführungsbeispiel bogenförmig ist, wird die im ersten Hauptabschnitt 12a bzw. 12a' entlang der erste Hauptebene 13a verlaufende Dichtfläche 10 bzw. 11 aus der ersten Hauptebene 13a um die genannten 70 Grad mittels einer geometrischen Krümmung hinausgeführt und geht in die erste Schenkelebene 16a über, wie in Figur 2e veranschaulicht. Auch zwischen dem zweiten Hauptabschnitt 12b bzw. 12b' und den beiden zweiten Schenkeln 15b bzw. 15b' ist jeweils der zweite Krümmungsabschnitt 17b bzw. 17b' der ersten Dichtfläche 10 bzw. der zweiten Dichtfläche 11 angeordnet, in welchem die im zweiten Hauptabschnitt 12b bzw. 12b' entlang der zweiten Hauptebene 13b verlaufende Dichtfläche 10 bzw. 11 aus der zweiten Hauptebene 13b um die genannten 70 Grad mittels der geometrischen Krümmung hinausgeführt ist, so dass die Dichtfläche 10 bzw. 11 in die zweite Schenkelebene 16b übergeht.

Die ersten und zweiten Hauptabschnitte 12a, 12a', 12b und 12b' haben jeweils zueinander nicht nur einen geometrischen Versatz quer zu der Verstellachse 6, der mittels der U-förmigen Seitenabschnitte 14a, 14a', 14b und 14b, im Speziellen mittels der Basen 15c bzw. 15c' überbrückt wird, sondern auch einen geometrischen Versatz in Richtung parallel zur Verstellachse 6. In diesem Bereich erstreckt sich die Öffnung 3 bzw. die Verschlussfläche 19. Im Folgenden wir die Überbrückung dieses Bereich beschrieben.

Der erste Hauptabschnitt 12a bzw. 12a' verläuft geradlinig auf einer ersten Horizontalebene 18a, zu welcher die Verstellachse 6 eine Flächennormale bildet, wie in den Figuren 1b bzw. 2c gezeigt. Auch der zweite Hauptabschnitt 12b bzw. 12b' erstreckt sich geradlinig auf einer zweiten Horizontalebene 18b, zu welcher die Verstellachse 6 ebenfalls eine Flächennormale bildet. Die erste Horizontalebene 18a und die zweite Horizontalebene 18b sind zueinander parallel und zueinander beabstandet, Figuren 1b bzw. 2c. Die beiden ersten Schenkel 15a bzw. 15a', die beiden zweiten Schenkel 15b bzw. 15b' und die beiden Basen 15c bzw. 15c' erstrecken sich zwischen der ersten Horizontalebene 18a und der zweiten Horizontalebene 18b. Die beiden als Bögen ausgebildeten Basen 15c bzw. 15c' liegen auf einer gemeinsamen dritten Horizontalebene 18c, welche mittig zwischen der ersten Horizontalebene 18a und der zweiten Horizontalebene 18b verläuft. Auch zu der dritten Horizontalebene 18c bildet die Verstellachse 6 eine Flächennormale. Die drei Horizontalebenen 18a, 18b und 18c sind parallel.

Auch die die beiden ersten Krümmungsabschnitte 17a bzw. 17a' liegen auf der ersten Hauptebene 13a. Ausserdem verlaufen die beiden zweiten Krümmungsabschnitte 17b bzw. 17b' auf der zweiten Hauptebene 13b, wie in den Figuren 1a und 1b bzw. 2c und 2d dargestellt. Im ersten Ausführungsbeispiel verlaufen also ausser den Schenkeln 15a und 15b bzw. 15a' und 15b' alle Abschnitte der Dichtflächen 10 bzw. 11 auf Horizontalebenen 18a, 18b und 18c und können den Versatz in Richtung parallel zur Verstellachse 6 nicht überbrücken. Daher erstrecken sich die beiden ersten Schenkel 15a bzw. 15a' und die beiden zweiten Schenkel 15b bzw. 15b' schräg in Richtung der Verstellachse 6 und überbrücken somit den Abstand zwischen der ersten Horizontalebene 18a und der zweiten Horizontalebene 18b, wie in den Figuren 1a und 1b bzw. 2b und 2d erkennbar. Diese Überbrückung ist in Richtung parallel zur Verstellachse 6 in Hinblick auf die Belastung der Dichtung besonders kritisch, da die Dichtung beim Verpressen in der geschlossenen Position C in diesem Abschnitt im Gegensatz zu allen anderen Abschnitten, die in Horizontalebenen 18a, 18b und 18c verlaufen, nicht nur senkrecht belastet wird, sondern beim Verpressen der Dichtung auch in Längsrichtung. Zwar ist die Belastung in Längsrichtung unkritischer als eine Belastung in Querrichtung, die bei der erfindungsgemässen Dichtgeometrie gänzlich vermeidbar ist, jedoch sollte eine übermässige Längsbelastung vermieden werden. Der Überbrückungswinkel sollte daher nicht zu steil sein. Aufgrund der abgewinkelten Seitenabschnitte kann dieser Winkel in Richtung der Verstellachse 6 verhältnismässig klein sein, wie in den Figuren 1b und 2c gezeigt. Dadurch vergrössert sich zwar die Längserstreckung dieses Übergangbereichs, jedoch wirkt sich dies nur geringfügig auf die Breite des Vakuumventils aus, wie auch in Figur 2a gezeigt, da sich der Übergangsbereich aufgrund der eingeklappten Seitenabschnitte vor allem in Richtung parallel zur Öffnungsachse 4 erstreckt. Somit wird das Vakuumventil 1 und das Verschlussglied 5 zwar etwas tiefer, jedoch im Verhältnis zur Öffnungsbreite b schmäler. Durch die Tiefenzunahme der Dichtgeometrie wird eine Zunahme der Steifigkeit des Vakuumventils 1 und dessen Verschlussglied 5 erreicht.

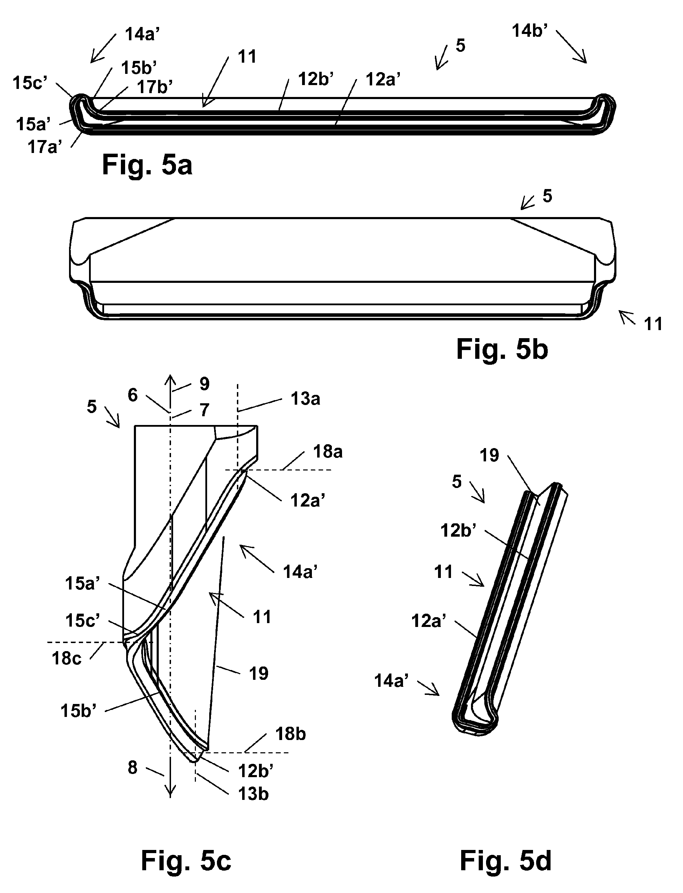

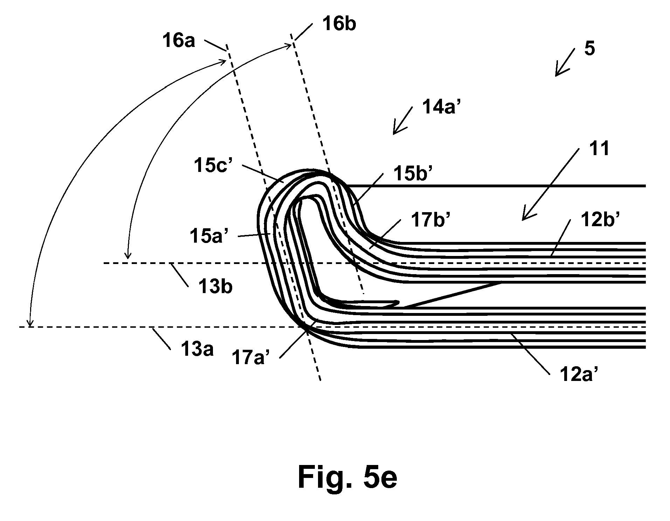

Während beim ersten Ausführungsbeispiel die Krümmungsabschnitte 17a, 17a', 17b und 17b' und die Basen 15c und 15c' auf den Horizontalebenen 18a, 18b bzw. 18c liegen, sich somit nicht parallel zu der Verstellachse 6 erstrecken und den Abstand zwischen den Hauptabschnitten 12a und 12b bzw. 12a' und 12b' in Richtung parallel zur Verstellachse 6 nicht überbrücken, erstrecken sich im zweiten Ausführungsbeispiel gemäss den Figuren 4a bis 5e auch diese Abschnitte in Richtung parallel zur Verstellachse 6. Wie in den Figuren 4a und 4b bzw. 5c und 5d gezeigt, überbrücken die beiden Basen 15c den Abstand zwischen der ersten Horizontalebene 18a und der zweiten Horizontalebene 18b teilweise, indem sie jeweils als ein sich im Wesentlichen parallel zu der Verstellachse 6 erstreckendes Segment einer Helix ausgebildet sind. Die Basen 15c bzw. 15c' gehen in die Schenkel 15a, 15a', 15b bzw. 15b' über, die als leicht verdrehte und verwundete Geraden ausgebildet sind, Figur 5e. Die ersten Schenkel 15a bzw. 15a' gehen in die beiden ersten Krümmungsabschnitte 17a bzw. 17a über, die sich zwischen der ersten Horizontalebene 18a und der dritten Horizontalebene 18c erstrecken, während die zweiten Schenkel 15b bzw. 15b' in die beiden zweiten Krümmungsabschnitte 17b bzw. 17b übergehen, die sich zwischen der zweiten Horizontalebene 18b und der dritten Horizontalebene 18c erstrecken, wie in den Figuren 4b und 5c veranschaulicht. Die beiden ersten Krümmungsabschnitte 17a bzw. 17a' und die beiden zweiten Krümmungsabschnitte 17b bzw. 17b' sind jeweils als ein sich im Wesentlichen parallel zu der Verstellachse 6 erstreckendes Segment einer Helix ausgebildet, wie in den Figuren 4a, 4b, 5a, 5b, 5c, 5d und 5e gezeigt. Somit überbrücken die beiden ersten Krümmungsabschnitte 17a bzw. 17a' und die beiden zweiten Krümmungsabschnitte 17b bzw. 17b' den Abstand zwischen der ersten Horizontalebene 18a und der zweiten Horizontalebene 18b und zwischen dem ersten Hauptabschnitt 12a bzw. 12a' und dem zweiten Hauptabschnitt 12b bzw. 12b' teilweise. Die restlichen Merkmale des zweiten Ausführungsbeispiels entsprechen im Wesentlichen denen des ersten Ausführungsbeispiels, weshalb auf die entsprechenden obigen Ausführungen verwiesen sei.

Selbstverständlich ist es möglich, die einzelnen spezifischen Merkmale des zweiten Ausführungsbeispiels mit denen des ersten Ausführungsbeispiels, und umgekehrt, zu kombinieren und beispielsweise lediglich eine oder mehrere der Basen und/oder einen oder mehrere der ersten Krümmungsabschnitte als überbrückende Abschnitte, insbesondere in Form eines Segments einer Helix, auszubilden. Anstelle einer Bogen- oder Helixgeometrie werden von der Erfindung auch andere zwei-oder zweidimensional erstreckende Geometrien erfasst, welche funktional den beschrieben Geometrien gleichen.

## Patentansprüche

1. Vakuumventil (1) zum gasdichten Schliessen eines Fliesswegs (F) mittels einer Linearbewegung, mit
● einem Ventilgehäuse (2) mit einer Öffnung (3) für den Fliessweg (F), wobei die Öffnung (3) eine geometrische Öffnungsachse (4) entlang des Fliesswegs (F) aufweist,
● einem Verschlussglied (5), das linear entlang einer zu der Öffnungsachse (4) quer verlaufenden, geometrischen Verstellachse (6) in einer Verschlussgliedebene (7) von
□ einer die Öffnung (3) freigebenden, geöffneten Position (O) in
□ eine über die Öffnung (3) linear geschobene, geschlossene Position (C) in eine Schliessrichtung (8)
und umgekehrt zurück in eine Öffnungsrichtung (9) verschiebbar ist,
● einer die Öffnung (3) umschliessenden, zumindest teilweise gekrümmten ersten Dichtfläche (10) des Ventilgehäuses (2) und
● einer mit der ersten Dichtfläche (10) korrespondierenden, eine der ersten Dichtfläche (10) entsprechende Form aufweisenden zweiten Dichtfläche (11) des Verschlussglieds (5),
wobei
● sich die erste Dichtfläche (10) aus unterschiedlich geformten, jeweils zu der Verstellachse (6) nichtparallelen Abschnitten (12a, 12b, 14a, 14b, 17a, 17b) zusammensetzt,
● die Flächennormalen der Abschnitte (12a, 12b, 14a, 14b, 17a, 17b) der ersten Dichtfläche (10) zu der Verstellachse (6) jeweils parallele Richtungskomponenten aufweisen und somit die erste Dichtfläche (10) senkrecht oder schräg in die Öffnungsrichtung (9) weist,
● ein erster Hauptabschnitt (12a) der ersten Dichtfläche (10) im Wesentlichen entlang einer geometrischen ersten Hauptebene (13a) verläuft,
● ein zweiter Hauptabschnitt (12b) der ersten Dichtfläche (10) im Wesentlichen entlang einer geometrischen zweiten Hauptebene (13b) verläuft,
● die erste Hauptebene (13a) und die zweite Hauptebene (13b) zueinander beabstandet sind und parallel zu der Verschlussgliedebene (7) verlaufen und somit der erste Hauptabschnitt (12a) und der gegenüberliegende zweite Hauptabschnitt (12b) zueinander einen geometrischen Versatz quer zu der Verstellachse (6) aufweisen,
● zwischen den beiden gegenüberliegenden Hauptabschnitten (12a, 12b) die Öffnung (3) angeordnet ist,
● ein seitlicher erster U-förmiger Seitenabschnitt (14a) der ersten Dichtfläche (10) den ersten Hauptabschnitt (12a) und den zweite Hauptabschnitt 12b) auf der einen Seite der ersten Dichtfläche (10) verbindet,
● ein seitlicher zweiter U-förmiger Seitenabschnitt (14b) der ersten Dichtfläche (10) den ersten Hauptabschnitt (12a) und den zweiten Hauptabschnitt (12b) auf der anderen Seite der ersten Dichtfläche (10) verbindet,
● der erste U-förmige Seitenabschnitt (14a) und der zweite U-förmige Seitenabschnitt (14b) jeweils einen dem ersten Hauptabschnitt (12a) zugeordneten ersten Schenkel (15a), einen dem zweiten Hauptabschnitt (12b) zugeordneten zweiten Schenkel (15b) und eine Basis (15c), der insbesondere als Bogen ausgebildet ist, aufweist,
● die beiden ersten Schenkel (15a) jeweils im Wesentlichen entlang zu der Verstellachse (6) parallelen ersten Schenkelebenen (16a) verlaufen,
● der erste Schenkel (15a) und der zweite Schenkel (15b) zueinander einen geometrischen Versatz quer zu der Verstellachse (6) aufweisen,
● die jeweilige Basis (15c) jeweils den ersten Schenkel (15a) und den zweiten Schenkel (15b) verbindet und den geometrischen Versatz quer zu der Verstellachse (6) überbrückt, und
● die zweite Dichtfläche (11) in der geschlossenen Position (C) in einem auf die erste Dichtfläche (10) in die Schliessrichtung (8) drückenden, dichtenden Kontakt mit der ersten Dichtfläche (10) steht und das Verschlussglied (5) mit einer Verschlussfläche (19) die Öffnung (3) gasdicht verschliesst,
**dadurch gekennzeichnet, dass**
● die beiden ersten Schenkelebenen (16a) jeweils um mindestens 30 Grad gegenüber der ersten Hauptebene (13a) abgewinkelt sind und
● zwischen dem ersten Hauptabschnitt (12a) und den beiden ersten Schenkeln (15a) jeweils ein erster Krümmungsabschnitt (17a) der ersten Dichtfläche (10) angeordnet ist, in welchem die im ersten Hauptabschnitt (12a) entlang der erste Hauptebene (13a) verlaufende Dichtfläche (10) aus der ersten Hauptebene (13a) um die mindestens 30 Grad insbesondere mittels einer geometrischen Krümmung hinausgeführt ist und in die erste Schenkelebene (16a) übergeht.

2. Vakuumventil (1) nach Anspruch 1,
**dadurch gekennzeichnet, dass**
● die beiden zweiten Schenkel (15b) im Wesentlichen entlang zu der Verstellachse (6) parallelen zweiten Schenkelebenen (16b) verlaufen,
● die beiden zweiten Schenkelebenen (16b) jeweils um mindestens 30 Grad gegenüber der zweiten Hauptebene (13b) abgewinkelt sind und
● zwischen dem zweiten Hauptabschnitt (12b) und den beiden zweiten Schenkeln (15b) jeweils ein zweiter Krümmungsabschnitt (17b) der ersten Dichtfläche (10) angeordnet ist, in welchem die im zweiten Hauptabschnitt (12b) entlang der zweiten Hauptebene (13b) verlaufende erste Dichtfläche (10) aus der zweiten Hauptebene (13b) um die mindestens 30 Grad insbesondere mittels einer geometrischen Krümmung hinausgeführt ist und in die zweite Schenkelebene (16b) übergeht.

3. Vakuumventil (1) nach Anspruch 2,
**dadurch gekennzeichnet, dass**
● die erste Schenkelebene (16a) und die zweite Schenkelebene (16b) des ersten U-förmigen Seitenabschnitts (14a) im Wesentlichen parallel zueinander verlaufen und
● die erste Schenkelebene (16a) und die zweite Schenkelebene (16b) des zweiten U-förmigen Seitenabschnitts (14b) im Wesentlichen parallel zueinander verlaufen.

4. Vakuumventil (1) nach Anspruche 2 oder 3,
**dadurch gekennzeichnet, dass**
● die beiden ersten Schenkelebenen (16a) jeweils um mindestens 45 Grad, insbesondere um mindestens 60 Grad, insbesondere um höchstens 120 Grad, gegenüber der ersten Hauptebene (13a) und
● die beiden zweiten Schenkelebenen (16b) jeweils um mindestens 45 Grad, insbesondere um mindestens 60 Grad, insbesondere um höchstens 120 Grad, gegenüber der zweiten Hauptebene (13b)
abgewinkelt sind.

5. Vakuumventil (1) nach einem der Ansprüche 2 bis 4,
**dadurch gekennzeichnet, dass**
● der erste Hauptabschnitt (12a) geradlinig auf einer ersten Horizontalebene (18a), zu welcher die Verstellachse (6) eine Flächennormale bildet, verläuft,
● der zweite Hauptabschnitt (12b) geradlinig auf einer zweiten Horizontalebene (18b), zu welcher die Verstellachse (6) eine Flächennormale bildet, verläuft,
● die erste Horizontalebene (18a) und die zweite Horizontalebene (18b) zueinander parallel und zueinander beabstandet verlaufen,
● sich die beiden ersten Schenkel (15a), die beiden zweiten Schenkel (15b) und die beiden Basen (15c) zwischen der ersten Horizontalebene (18a) und der zweiten Horizontalebene (18b) erstrecken und
● die beiden ersten Schenkel (15a) und die beiden zweiten Schenkel (15b), und insbesondere die beiden Basen (15c), den Abstand zwischen der ersten Horizontalebene (18a) und der zweiten Horizontalebene (18b) zumindest teilweise überbrücken.

6. Vakuumventil (1) nach Anspruch 5,
**dadurch gekennzeichnet, dass**
die beiden Basen (15c) auf einer gemeinsamen dritten Horizontalebene (18c), welche zwischen der ersten Horizontalebene (18a) und der zweiten Horizontalebene (18b) liegt zu welcher die Verstellachse (6) eine Flächennormale bildet, verlaufen und insbesondere jeweils als Bogen ausgebildet sind.

7. Vakuumventil (1) nach Anspruch 6,
**dadurch gekennzeichnet, dass**
die dritte Horizontalebene (18c) mittig zwischen der ersten Horizontalebene (18a) und der zweiten Horizontalebene (18b) liegt.

8. Vakuumventil (1) nach Anspruch 5,
**dadurch gekennzeichnet, dass**
● die beiden Basen (15c) den Abstand zwischen der ersten Horizontalebene (18a) und der zweiten Horizontalebene (18b) teilweise überbrücken und jeweils als ein sich im Wesentlichen parallel zu der Verstellachse (6) erstreckendes Segment einer Helix ausgebildet sind.

9. Vakuumventil (1) nach einem der Ansprüche 5 bis 8,
**dadurch gekennzeichnet, dass**
● die beiden ersten Krümmungsabschnitte (17a) auf der ersten Hauptebene (13a) und
● die beiden zweiten Krümmungsabschnitte (17b) auf der
zweiten Hauptebene (13b)
verlaufen.

10. Vakuumventil (1) nach einem der Ansprüche 5 bis 8,
**dadurch gekennzeichnet, dass**
● sich die beiden ersten Krümmungsabschnitte (17a) und die beiden zweiten Krümmungsabschnitte (17b) zwischen der ersten Horizontalebene (18a) und der zweiten Horizontalebene (18b) erstrecken und
● die beiden ersten Krümmungsabschnitte (17a) und die beiden zweiten Krümmungsabschnitte (17b) den Abstand zwischen der ersten Horizontalebene (18a) und der zweiten Horizontalebene (18b) teilweise überbrücken,
● insbesondere die beiden ersten Krümmungsabschnitte (17a) und die beiden zweiten Krümmungsabschnitte (17b) als ein sich im Wesentlichen parallel zu der Verstellachse (6) erstreckendes Segment einer Helix ausgebildet sind.

11. Vakuumventil (1) nach einem der Ansprüche 1 bis 10,
**dadurch gekennzeichnet, dass**
● das Vakuumventil (1) als ein Transferventil ausgebildet ist und
● die Breite (w) der Öffnung senkrecht zu der Verstellachse (6) mindestens das Doppelte, insbesondere mindestens das Dreifache, insbesondere mindestens das Fünffache, der Höhe (h) der Öffnung parallel zu der Verstellachse (6) beträgt.

12. Vakuumventil (1) nach einem der Ansprüche 1 bis 11,
**dadurch gekennzeichnet, dass**
die Öffnungsachse (4) im Wesentlichen eine Flächennormale der Verschlussgliedebene (7) bildet.

13. Verschlussglied (5) zum gasdichten Schliessen eines Fliesswegs (F) mittels einer Linearbewegung, insbesondere für ein Vakuumventil nach einem der Ansprüche 1 bis 12, mit
● einer geometrischen Verstellachse (6) in einer Verschlussgliedebene (7) und
● einer zweiten Dichtfläche (11)
wobei
● sich die zweite Dichtfläche (10) aus unterschiedlich geformten, jeweils zu der Verstellachse (6) nichtparallelen Abschnitten (12a', 12b', 14a', 14b', 17a', 17b') zusammensetzt,
● die Flächennormalen der Abschnitte (12a', 12b', 14a', 14b', 17a', 17b') der zweiten Dichtfläche (11) zu der Verstellachse (6) jeweils parallele Richtungskomponenten aufweisen und somit die zweite Dichtfläche (11) senkrecht oder schräg in eine Öffnungsrichtung (9) der Verstellachse (6) weist,
● ein erster Hauptabschnitt (12a') der zweiten Dichtfläche (11) im Wesentlichen entlang einer geometrischen ersten Hauptebene (13a) verläuft,
● ein zweiter Hauptabschnitt (12b') der zweiten Dichtfläche (11) im Wesentlichen entlang einer geometrischen zweiten Hauptebene (13b) verläuft,
● die erste Hauptebene (13a) und die zweite Hauptebene (13b) zueinander beabstandet sind und parallel zu der Verschlussgliedebene (7) verlaufen und somit der erste Hauptabschnitt (12a') und der gegenüberliegende zweite Hauptabschnitt (12b') zueinander einen geometrischen Versatz quer zu der Verstellachse (6) aufweisen,
● zwischen den beiden gegenüberliegenden Hauptabschnitten (12a', 12b') eine insbesondere im Wesentlichen parallel zu der Verschlussgliedebene (7) verlaufende Verschlussfläche (19) des Verschlussgliedes (5) angeordnet ist,
● ein seitlicher erster U-förmiger Seitenabschnitt (14a') der zweiten Dichtfläche (11) den ersten Hauptabschnitt (12a') und den zweiten Hauptabschnitt (12b') auf der einen Seite der zweiten Dichtfläche (11) verbindet,
● ein seitlicher zweiter U-förmiger Seitenabschnitt (14b') der zweiten Dichtfläche (11) den ersten Hauptabschnitt (12a') und den zweiten Hauptabschnitt 12b') auf der anderen Seite der zweiten Dichtfläche (11) verbindet,
● der erste U-förmige Seitenabschnitt (14a') und der zweite U-förmige Seitenabschnitt (14b') jeweils einen dem ersten Hauptabschnitt (12a') zugeordneten ersten Schenkel (15a'), einen dem zweiten Hauptabschnitt (12b') zugeordneten zweiten Schenkel (15b') und eine Basis (15c') aufweist,
● die beiden ersten Schenkel (15a') jeweils im Wesentlichen entlang zu der Verstellachse (6) parallelen ersten Schenkelebenen (16a) verlaufen,
● der erste Schenkel (15a') und der zweite Schenkel (15b') zueinander einen geometrischen Versatz quer zu der Verstellachse (6) aufweisen,
● die jeweilige Basis (15c') jeweils den ersten Schenkel (15a') und den zweiten Schenkel (15b') verbindet und den geometrischen Versatz quer zu der Verstellachse (6) überbrückt, und
● mittels der zweiten Dichtfläche (11) in einer geschlossenen Position (C) des Verschlussglieds (5) ein dichtender Kontakt mit einer ersten Dichtfläche (10) eines Vakuumventils (1) zum gasdichten Verschliessen einer Öffnung (3) des Vakuumventils (1) durch lineares Drücken der zweiten Dichtfläche (11) auf die erste Dichtfläche (10) in eine Schliessrichtung (8) der Verstellachse (6) herstellbar ist,
**dadurch gekennzeichnet, dass**
● die beiden ersten Schenkelebenen (16a) jeweils um mindestens 30 Grad gegenüber der ersten Hauptebene (13a) abgewinkelt sind und
● zwischen dem ersten Hauptabschnitt (12a') und den beiden ersten Schenkeln (15a') jeweils ein erster Krümmungsabschnitt (17a') der zweiten Dichtfläche (11) angeordnet ist, in welchem die im ersten Hauptabschnitt (12a') entlang der ersten Hauptebene (13a) verlaufende zweite Dichtfläche (11) aus der ersten Hauptebene (13a) um die mindestens 30 Grad insbesondere mittels einer geometrischen Krümmung hinausgeführt ist und in die erste Schenkelebene (16a) übergeht.

14. Verschlussglied (5) nach Anspruch 13,
**dadurch gekennzeichnet, dass**
● die beiden zweiten Schenkel (15b') im Wesentlichen entlang zu der Verstellachse (6) parallelen zweiten Schenkelebenen (16b) verlaufen,
● die beiden zweiten Schenkelebenen (16b) jeweils um mindestens 30 Grad gegenüber der zweiten Hauptebene (13b) abgewinkelt sind und
● zwischen dem zweiten Hauptabschnitt (12b') und den beiden zweiten Schenkeln (15b') jeweils ein zweiter Krümmungsabschnitt (17b') der zweiten Dichtfläche (11) angeordnet ist, in welchem die im zweiten Hauptabschnitt (12b') entlang der zweiten Hauptebene (13b) verlaufende zweite Dichtfläche (11) aus der zweiten Hauptebene (13b) um die mindestens 30 Grad insbesondere mittels einer geometrischen Krümmung hinausgeführt ist und in die zweite Schenkelebene (16b) übergeht.

15. Vakuumventil nach Anspruch 14,
**dadurch gekennzeichnet, dass**
● die erste Schenkelebene (16a) und die zweite Schenkelebene (16b) des ersten U-förmigen Seitenabschnitts (14a') im Wesentlichen parallel zueinander verlaufen und
● die erste Schenkelebene (16a) und die zweite Schenkelebene (16b) des zweiten U-förmigen Seitenabschnitts (14b') im Wesentlichen parallel zueinander verlaufen.
